# EUROPÄISCHE PATENTSCHRIFT

(11) **EP 1 215 509 B1**
(45) Veröffentlichungstag und Bekanntmachung des Hinweises auf die Patenterteilung: **20.08.2008**
(21) Anmeldenummer: 01129848.6
(22) Anmeldetag: 14.12.2001
(51) Int. Cl.: G01S 5/14, G09B 29/10

(54) **Universelles Kommunikationssystem und Mobilteil hierfür**
Universal communication system and corresponding mobile terminal
Système de communication universel et terminal mobile correspondant

(30) Priorität: 15.12.2000 DE 20021899 U
(43) Veröffentlichungstag der Anmeldung: 19.06.2002
(73) Patentinhaber: Herpolsheimer, Wolfgang, 87534 Oberstaufen (DE); Frey, Hartmut, 71120 Grafenau (DE); Runge, Bernd, 75177 Pforzheim (DE)
(72) Erfinder: Herpolsheimer, Wolfgang, 87534 Oberstaufen (DE); Frey, Hartmut, 71120 Grafenau (DE); Runge, Bernd, 75177 Pforzheim (DE)

(56) Entgegenhaltungen:
- DE-U- 29 811 445
- DE-U- 29 812 591
- US-A- 6 111 539
- YANG T T ET AL: "Use of MOBITEX wireless wide area networks as a solution to land-based positioning and navigation" POSITION LOCATION AND NAVIGATION SYMPOSIUM, 1994., IEEE LAS VEGAS, NV, USA 11-15 APRIL 1994, NEW YORK, NY, USA,IEEE, 11. April 1994 (1994-04-11), Seiten 91-98, XP010117718 ISBN: 0-7803-1435-2

## Beschreibung

Die Erfindung betrifft ein Kommunikationssystem mit stationären und mobilen Elementen, das als Navigations-, Ortungs- und Informationssystem gestaltet und zum Notfall- und Sicherheitssystem weitergebildet wurde und als solches einsetzbar ist und das mindestens ein Mobilteil aufweist, sowie Mobilteile hierfür.

Die Mobilteile und das Navigationssystem, sowie das Kommunikationssystem arbeiten vorzugsweise mit Navigations- und Mobilfunk - Standards, die auf der Basis von "GPS" = "Global Positionierungs System", von " "DGPS" "Differentiales Global Positionierungs System" mit Pseudoliten bzw. mit terrestischer Pseudo-GPS-Satelliten - Ortung, von "GSM" = Global System for Mobil Communications, von "GPRS" = "General Paket Radio Services"® und/oder von GSM, ggf. mit GPRS-Übertragungstechnik für das Informationssystem, insbesondere aber auch von "UMTS" = "Universal Mobile Telecommunications Systems", "GNSS" = Global positioning Navigation Satellite System"®, "EGNOS" ® = "European Geostationary Navigation Overlay System", "Galileo®" = "Europe's own global satellite navigation system inter-operable with GPS & GLONASS" und/oder sonstigen, verfügbaren Systemen beruhen und hauptsächlich aus einem Rechner, bzw. einem Kontrollsystem, einem Peilsystem, wie z.B. Peilsatelliten mit Referenzstation(en) und/oder terrestrischen Peilstationen mit Antennenanlagen und/oder Infrarot - Systemen_und mindestens einem Mobilteil und ggf. sonstigen Komponenten sowie entsprechender Software besteht.

Mit ® gekennzeichnete Begriffe sind Markennamen der jeweiligen Betreiber-Firmen.

Neben den herkömmlichen Mobilfunk - Standard können aber auch Kurz- oder Langwellen Amateurfunk oder Rundfunk - Standards oder sogenannte Mini-Funksysteme ebenso Anwendung finden wie moderne Internet / W@P-Standards, PDA-Multimedia-Card-Standard, SMS, Multimedia, "Voice_" und ähnliche Übertragungssysteme. Insbesondere auch: WAP = "Wireless Application Protocol", "PDA" = "Personal Digital Assistant", WLAN (Wireless Local Area Network), EWAN ® (EGNOS Wide Area Network), RIMS® (Ranging and Integrity Monitoring Station), PBCC ® (Packet Binary Convolution Coding), OFDM ® (Orthogonal Frequency Division Multiplexing), WiFi (Wireless Fidelity) und/oder "Bluetooth®" = "wireless technology", zur Übertragung großer Datenmengen auf kürzeren Entfernungen zwischen verschiedenen Kommunikationsmitteln, wie z.B. Telefonen, Handys und Computern.

Die Verwendung soll hierbei vorzugsweise im persönlichen und im professionellen Bereich des individuellen Benutzers, insbesondere auch im Rahmen aktiver Betätigungen in freier Natur vorgesehen sein, schließt aber auch anderweitige kommerzielle Nutzung und strategische Anwendungen nicht aus.

Navigationssysteme sind bisher vor allem als "GPS"- oder "DGPS"- Navigatoren bekannt und werden seit Jahren in der Luftfahrt, in der Wehrtechnik und in der allgemeinen Verkehrstechnik zur Peilung, zur Standortbestimmung und/oder als Ortungs- und Orientierungshilfe verwendet.

In jüngster Zeit finden solche Systeme auch verstärkt Anwendung in Kraftfahrzeugen, als sogenannte Routenplaner und Orientierungshilfen. Hierbei werden zusätzlich mit Hilfe digitalisierter Kartenprofile - vorzugsweise auf oder von CD-ROM oder aus Datenbanken - die regionalen Gebietsstrukturen vorgegeben und im Display des Empfängers angezeigt.

Bei einem beispielsweise als **[1a] "Road-Scout 97"** ^{®} bekannten derartigen System ist ein leistungsstarker (D)GPS-(Satelliten)-Empfänger mit einem zusätzlichen Korrekturdaten-Empfänger versehen, der mit "RTCM-Signalen" durch das Telefonfunknetz, z.B. über D-Netze, versorgt wird. Dadurch werden verbesserte, korrigierte Positionsdaten in Echtzeit auf das Display übertragen.

Nach **[D-1] = [1b]** US-PS 6111 539**, bzw.** EP 0 777 863 B1**, bzw.** DE 695 06 563 T2**,** soll ein "Navigations-Informations-System" Benutzer von Straßenfahrzeugen mit einer Streckenführung von einer festen (stationären) Einheit aus versorgen, insbesondere in Form eines Navigationsleitsystems, das als Trägheitsleitsystem, als Funkortungssystem und/oder als Satellitennavigationssystem gestaltet sein kann. Das mobile Teil kann hierbei in einem Fahrzeug angeordnet oder als Handgerät zur Führung eines Fußgängers ausgebildet sein. Ober ein Kommunikationssystem können aus einem positionsbezogen erfassten Pkw oder einer sonstigen mobilen Einheit heraus Führungsinformationen angefordert werden, die dann als Informationen, bezogen auf den augenblicklichen Standort und nach Angabe eines gewünschten Zieles, von der festen Einheit des Leitsystems an das mobile Teil übermittelt werden. Die stationäre Einheit verwaltet, betreut und aktualisiert hierbei alle Daten zentral und für alle Nutzer, bzw. für alle mobilen Einheiten, einheitlich.

Dieses System ist zwar sehr wirtschaftlich, und lässt sich auch zur Zugriffsüberwachung, zur Anlagenüberwachung, zur Gebührenkontrolle auf Straßen oder zur Feststellung der Verkehrsdichte einsetzen, es lässt aber keinerlei individuellen Gestaltungsspielraum und Variabilität zu, besonders auch nicht hinsichtlich persönlicher Sonderwünsche oder einzelner, persönlicher Notfall- und Sicherheitsaspekte oder von Gefahren-Wamungen, außerhalb der vom System vorgegebenen Programmpunkte. Außerdem ist es kaum in freier unwegsamer Natur wirtschaftlich und universell einsetzbar.

Darüber hinaus sind seit einiger **Zeit [2a]** unter den Bezeichnungen **"Garmin GPS 12"**® und **[2b] "Garmin GPS 12 XL"**® auch bereits Navigationssysteme bekannt, deren Mobilteile als tragbare Handgeräte einsetzbare GPS-Empfänger sind, die - ähnlich wie ein "Handy" - als mobiles Navigationsgerät für den persönlichen Gebrauch vielfach Verwendung finden und die teilweise auch die relativ großen Geräte in Kraftfahrzeugen ersetzen können.
Ebenso gibt es **[3]** z.B. unter dem Namen **"Benefon Esc"**® inzwischen auch kombinierte GPS-Navigationsgeräte mit Handys, zur Positionierung des eigenen Standortes und zum Informationsaustausch durch das Handy.
Nachteilig bei allen bekannten Navigationssystemen ist es, dass das Mobilteil als Empfänger einerseits in allen wesentlichen Funktionalitäten von der stationären Basisstation abhängt und in der Regel im Navigationsbereich nur als passives, Empfangsteil mit vorab eingespielten Karten und sonstigen Daten und mit ausschließlich auf 2D-Koordinaten bezogener Positionsübermittlung funktioniert und wirkt.

Zur Informationsübermittlung und zur Kommunikation gibt es zudem neben einer Vielzahl "normaler" Handys für den mobilen Telefonverkehr bereits W@P-fähige Handgeräte in unterschiedlicher Konfiguration und Größe, die auch schon Internet-Anbindungen und - Nutzungen ermöglichen. Zukünftig insbesondere in Verbindung mit der "UMTS" Daten- und Übertragungstechnik.

Handys selbst weisen zwar Sende- und Empfangselemente auf, aber üblicherweise keine Komponenten, mit deren Hilfe Daten und/oder Positionsangaben mittels Peilsystemen einem Navigationssystem zur definierten Koordinaten bezogenen Standortbestimmung und/oder zur Orientierungshilfe zugeführt werden können.
Mit den Handys ist somit zwar eine umfassende Kommunikation möglich, nicht aber eine einwandfreie und schnelle Positionsbestimmung und/oder eine umfassende Navigationshilfe, insbesondere in der freien Natur.
Eine Aktualisierung oder Modifizierung vorgegebener Routen vor Ort, ist hierbei in der Regel ebenso wenig möglich, wie eine Übermittlung von Notrufen mit genauer Positionsangaben in Gefahren-Situationen, beispielsweise bei Skiwanderungen in verschneitem Gelände.

**Aus [4],** DE-GM 9411 778 U1**,** ist ein "mobiles Notrufgerät" bekannt, das als Funktelefon ausgebildet ist und in einem Gehäuse einen Sender, eine Ortungseinrichtung, einen Speicher und Auslöse-Tasten aufweist und das mittels Impulsen bei Notfallauslösung mit externen Empfängern kommuniziert. Die Ortung des Notrufgerätes (und dessen Träger) erfolgt über Satelliten - Navigation, z.B. durch GPS

In **[5],** US-PS 5 208 756**,** ist ein "Vehicle Locating And Navigating System" offenbart, das über Telephon-Netzwerke die Navigation und Standortbestimmung, z.B. eines Autos, ermöglicht. Ein lokalisierbarer und positionsgebender kleiner Sender ist hierbei in der Regel mit dem Auto fest verbunden. Der jeweilige Standort des Fahrzeuges wird dann von den externen Rechnern der Telefonstationen durch Schnittpunktermittlung festgestellt.

Nach **[6a],** DE-GM 94 06 605 U1**,** wird mit einem "System zur Ortung von gestohlenen Fahrzeugen" ein Diebstahlschutz für Kraftfahrzeuge beschrieben, der insbesondere im Zusammenwirken einer Leitzentrale für die Alarmdaten-Verarbeitung mit einem Navigationssystem, einem Nachrichtenkanal und einer speziellen Steuereinheit, mit der fahrzeugeigenen Alarmanlage besteht.

Ähnlich beschreibt auch **[D-2] = [6b]** DE-GM 29811 445 U1 ein "Funktelefon mit Standortbestimmungssystem", das als satellitengestütztes Navigationssystem Standortkoordinaten graphisch in einer Karte auf der Datenanzeige darstellen kann. Die Standortkoordinaten können hierbei auch gleichzeitig mit einem Notsignal gesendet werden, wobei das Notsignal und die Standortübermittlung durch drücken eines Notknopfes am Funktelefon oder durch externe Betätigung per Funk ausgelöst werden kann. Weitergehende Ausstattungen und Anwendungen sind hieraus nicht bekannt.

Gemäß **[7],** DE 196 19 330 A1**,** besteht eine "Hilferufanordhung" hauptsächlich aus einem mobilen Gerät zum Aussenden eines Hilferufes und einem Auswertungsgerät, das einen Sender beinhaltet, während das Mobilteil auch einen Empfänger aufweist. Die "Anordnung" soll zudem global wirksam sein und zur Vermeidung von Fehlbedienungen ein System zur Rückmeldung enthalten, wobei ein Rücksignal zur "Quittierung eines Notrufes" dienen und Fehlbedienungen ausschließt oder kompensieren soll.

Das in **[8],** DE 197 11 087 C1, offenbarte "Verfahren .... zum Auffinden und zur Ortsbestimmung von Personen, bzw. von beweglichen Gegenständen" weist ebenfalls eine Sendeeinrichtung und mindestens eine Sende- und Empfangsstation auf, wobei durch ein Aktivierungssignal mindestens eine Sende- und Empfangsstation erfasst wird und eine Positions- und Ortsbestimmung durch ein Erkennungssignal erfolgt. Hierzu soll jede Person einen unter der Haut implantierten Mikrosender erhalten, der nach Empfang eines Aktivierungssignals in kurzen Zeitabständen ein individuelles Erkennungssignal sendet.

Nachteilig auch bei allen diesen bekannten Systemen und Lösungen ist es, dass sie jeweils für sehr spezielle, bzw. für bestimmte Anwendungen geeignet sind und dass keines der bekannten Systeme und Geräte als optimales Wam- und Sicherheitssystem ausgestattet ist.

In **[9]**, den nicht vorveröffentlichten Anmeldungen DE 10064978.5 und DE 20021899.2 vom 15.12.2000 werden Mobilteile beschrieben, die als universelle Kommunikations- und Positionierungsgeräte für wechselseitigen Datenaustausch und ggf. auch als Notfall-Rettungssysteme geeignet sind. Sie sind jedoch noch nicht in vollem Umfang interaktiv und als optimale Wamsysteme nutzbar.

**Aufgabe** der Erfindung ist es daher, ein Kommunikationssystem und Mobilteile hierfür zu schaffen, das besonders als Sicherheits- und Notfallsystem mit Notruf einsetzbar ist und dessen Mobilteil(e) mehrere Funktionalitäten erfüllt bzw. erfüllen, insbesondere auch als **positionsabhängiges Warn- und Alarmierungssystem** in der Natur.
Wobei die Verwendung und vorteilhafte Nutzung derartiger Systeme und Geräte vor allem auch im regionalen und im individuellen persönlichen Bereich, in der Luft, zu Wasser oder auf dem Land, insbesondere auch in Bergregionen und beim Wintersport im Schnee ermöglicht sein soll.

Die **Lösung** dieser Aufgabe wird mit dem im **Anspruch 1** vorgeschlagenen **Kommunikationssystem** und mit dem **Mobilteil** gemäß **Anspruch 2** erfasst und beschrieben.
Vorteilhafte Ausgestaltungen und Weiterbildungen erfindungsgemäßer Mobilteile sind in den weiteren **Ansprüchen** umfasst.

Anhand einiger Abbildungen wird die Erfindung nachfolgend näher beschrieben. Hierbei zeigen:
- **Figur 1:**: ein erstes Kommunikationssystem,. mit Navigations- und Notrufsystem, mit Sende- und Empfangsanlagen und mit Mobilteilen,
- **Figur 2:**: ein zweites Kommunikationssystem, mit Navigations- und Sicherheitssystem, mit Sende- und Empfangsanlagen und mit Mobilteilen,
- **Figur 3:**: ein drittes Kommunikationssystem,. mit Navigations-, Notruf- und Sicherheitssystem, mit Sende- und Empfangsanlagen und mit Mobilteilen,
- **Figur 4:**: ein viertes Kommunikationssystem,. mit Navigations- und Sicherheitssystem, mit Sende- und Empfangsanlagen und mit Mobilteil,
- **Figur 5:**: ein zweites Kommunikationssystem mit GPS-Navigationssystem mit Übertragungssystem und mit einem als Armbandgerät gestalteten Mobilteil,
- **Figur 6:**: ein Kommunikationssystem als DGPS-Navigationssystem mit Peilsatelliten und mit Referenzstation,
- **Figur 7:**: ein vergrößertes, einfaches Mobilteil, mit beispielhaften Einzelpositionen.

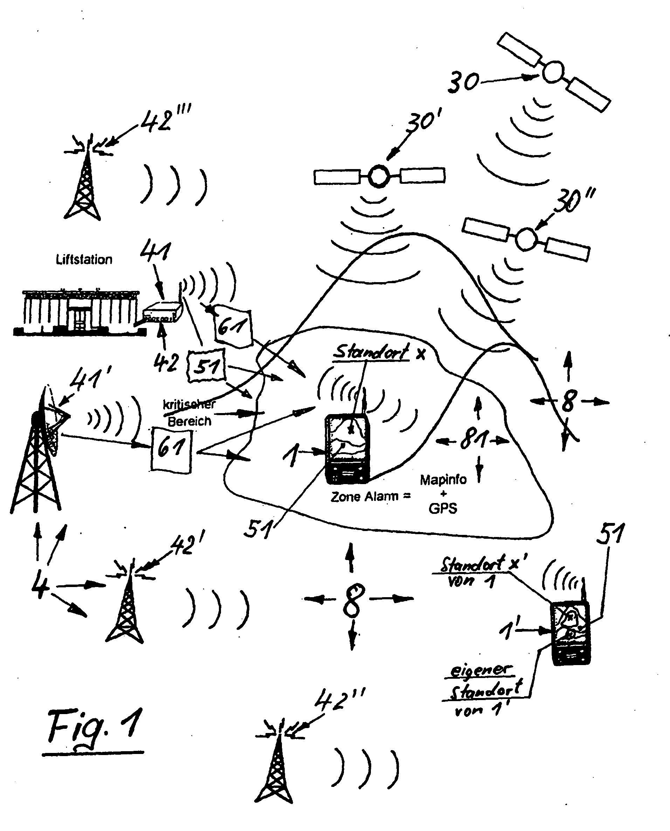

Das in **Figur 1** gezeigte erste Kommunikationssystem, mit Navigations- und Notrufsystem und mit Sende- und Empfangsanlagen 4 sowie mit zwei Mobilteilen 1, 1', stellt abstrahiert ein vorschlagsgemäßes Kommunikations- und Sicherheitssystem dar, in dem Sender und Empfänger 41, 41', 42, 42', 42", 42"' verteilt im Gelände 8 angeordnet sind. **Das Mobilteil 1**, und damit auch dessen Benützer, **befindet sich in einem gefährdeten Bereich 81.** Dies wurde durch die zum Navigationssystem gehörenden Peilsatelliten 30, 30', 30" durch automatische Positionsermittlung festgestellt. Dem Mobilteil 1 wurde daher von der Liftstation 41 bzw. von dem zweiten überregionalen Sender 41' und/oder von dem regionalen Sender 42' eine **Warnung 61** übermittelt. Zur Warnung an den Benutzer des Partner-Mobilteils 1' sendet das Mobilteil 1 diesem eine entsprechende **Gefahreninformation.** Das Mobilteil 1 gibt so lange akustische und/oder optische Alarmsignale bis der gefährdete Bereich 81 verlassen ist, sofern die Alarmsignale nicht bewusst abgeschaltet werden. Die Standorte X und X' von 1 und 1' sind auf beiden Geräten 1, 1' in dem von 41 übermittelten Lageplan 51 ersichtlich.

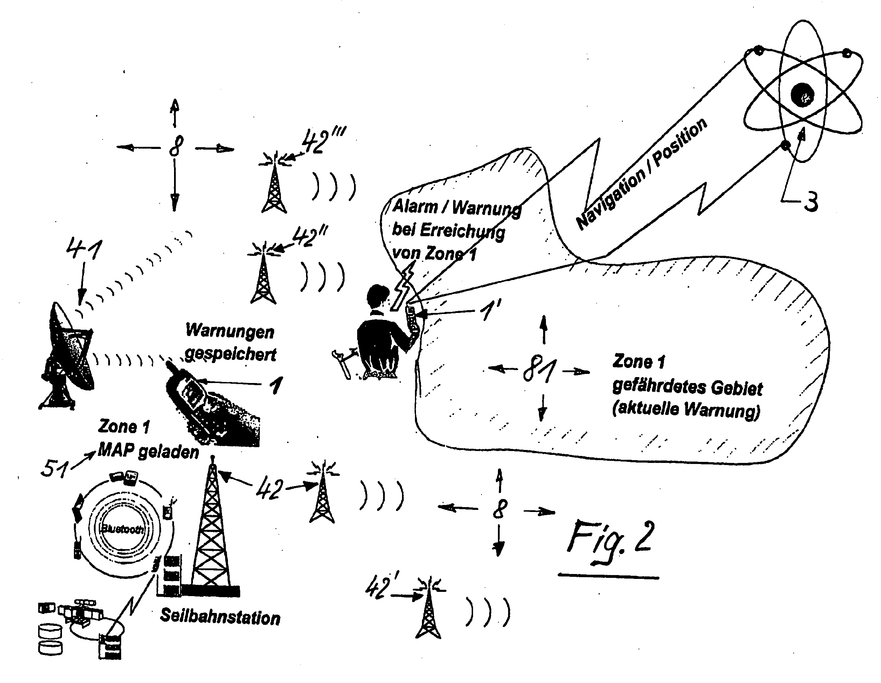

In **Figur 2** ist ein zweites Kommunikationssystem mit Navigations- und Sicherheitssystem dargestellt, mit Sende- und Empfangsanlagen 41, 42, 42', 42" und mit Mobilteilen 1, 1'. Während zunächst in das Mobilteil 1 über einen globalen Sender 41 MAP's und sonstige regionale Informationen geladen und ggf. zusammen mit aktuellen Wetterwarnungen gespeichert werden, **befindet sich der Benutzer** des Mobilteils 1' im Gelände 8 bereits arm **Rande eines gefährdeten Bereichs 81. Beim Erreichen des gefährdeten Bereichs 81 verursachen** die gespeicherten und/oder neu eingehenden **Warnungen 61** automatisch eine **Alarmauslösung**. **Das** im Rahmen des Navigationssystems wirksame Satelliten-**Peilsystem 3 verfolgt** hierbei **den Standort des Mobilteils 1' permanent.** Die Daten-Kommunikation zwischen Servern, Internet oder sonstigen Daten-Netzen; Rechnern und Mobilteilen erfolgt hierbei mittels der modernen "Bluetooth" ® -Technologie.

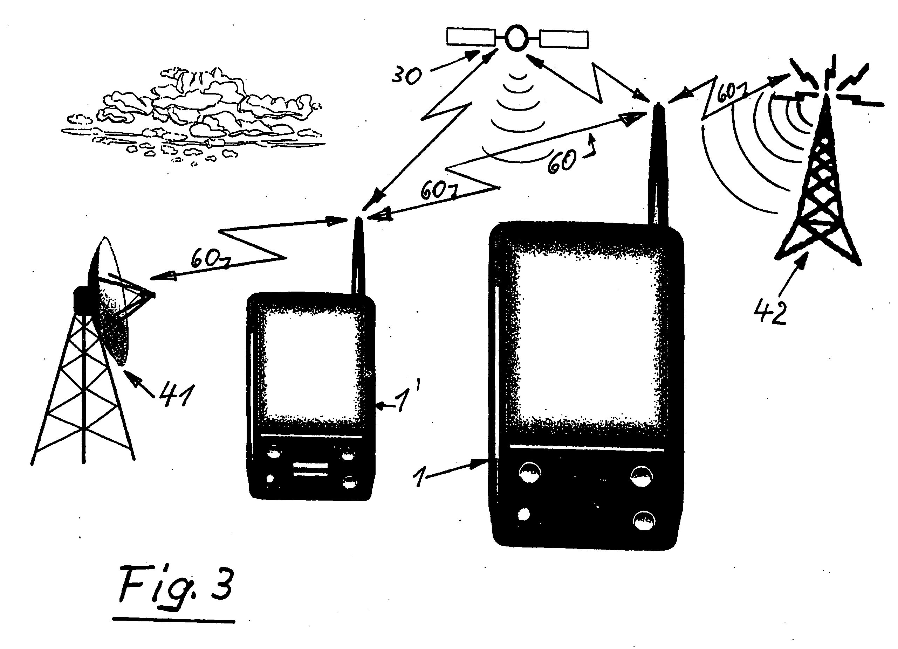

Nach **Figur 3** ist ein drittes Kommunikationssystem mit einem Peilsatelliten als Navigationskomponente und einem Notruf- und Sicherheitsystem ersichtlich, sowie mit globalen und regionalen Sende- und Empfangsanlagen 41, 42 und mit Mobilteilen 1, 1'. Interaktiver Datenaustausch erfolgt hierbei zwischen allen dargestellten Geräten. So dient der globale Sender 41 der Übermittlung von Grunddaten an das Mobilteil 1' und ggf. auch als fixer Positionspunkt für das Peilsystem 30, das die Mobilteile 1, 1' ständig anpeilt und die jeweiligen Standorte exakt ermittelt. Demgegenüber tauschen die Mobilteile 1, 1' Daten, bzw. **Informationen 60** untereinander aus und senden oder empfangen bedarfsweise auch direkt oder indirekt Daten und Informationen 60 von dem regionalen Sender 42 und weiteren.

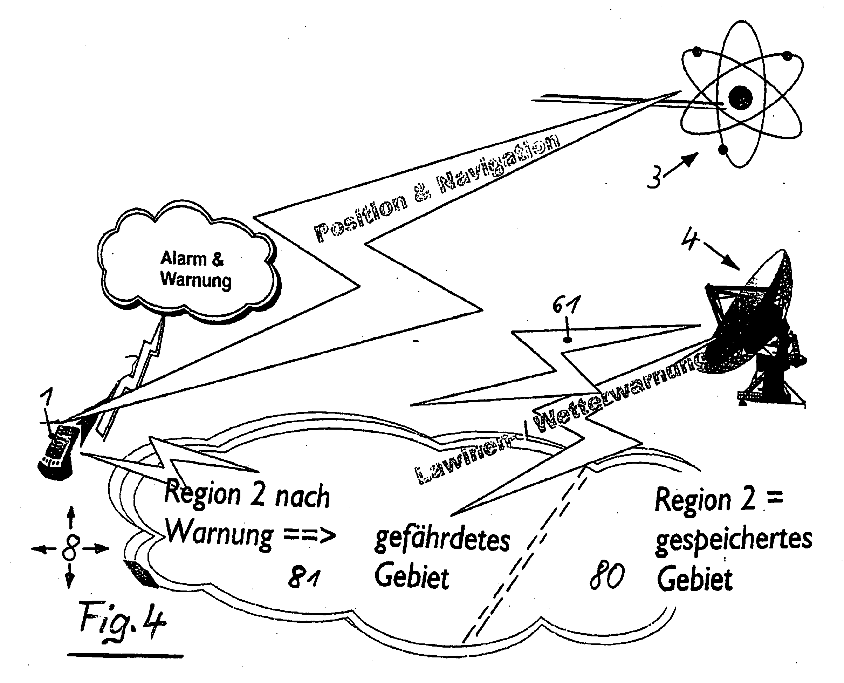

Auch in **Figur 4** wird ein weiteres Kommunikationssystem mit Navigations- und Sicherheitssystem gezeigt, mit einem Satelliten-Peilsystem 3, mit einer Sende- und Empfangsanlage 4 und mit einem Mobilteil 1. Der zunächst aus Grundlagendaten erfasste Geländeabschnitt 80 des gesamten Gebietes 8 wurde nach einer Lawinenwarnung teilweise zu **"gefährdetem Gebiet" 81,** für das "Zonenalarm" ausgelöst wurde. Die **im Mobilteil 1** hierzu **angekommene Warnung 61** signalisierte zunächst optisch auf dem Display des Mobilteils 1 die drohende Gefahr **und löst beim Erreichen der Gefahrenzone 81** auch akustischen und verstärkt optischen **Alarm aus.**

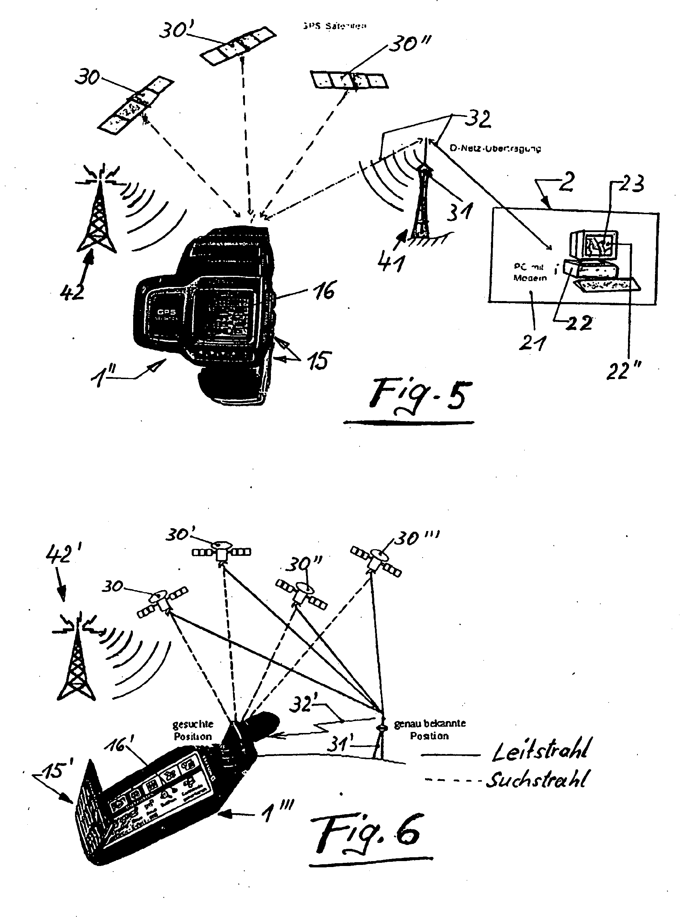

Die in den **Figuren 5 und 6** gezeigten Kommunikations- Navigations- und Sicherheitssysteme weisen mehrere Peilsatelliten 30, 30', 30", 30"' und mindestens jeweils eine terrestrische Sende- und Empfangsstation, bzw. Peilantennen 31, 31' auf.
Während gemäß **Figur 5** ein als Armband-Gerät gestaltetes handelsübliches GPS-Navigationsgerät als vorschlagsgemäß weitergebildetes Mobilteil 1" mit quadratischem Display 16 und geteilter Eingabeeinheit 15, sowie ein GPS-Navigations-System schematisch dargestellt ist, bei dem die Positionsbestimmung zunächst ausschließlich durch die Peilung zu mehreren Satelliten 30, 30', 30" erfolgt und eine Kontrollstation 2 als Basisstation 21 mit einem Basisrechner 22, zur Datenerfassung als Korrekturdaten-Empfänger dient und ein am Bildschirm 22" darstellbares Grunddaten-Profil 23 zeigt, das über ein Mobilfunknetz 32 zugeschalten wird, stellt **Figur 6** das Schema eines DGPS-Navigations-Systems dar, bei dem außer den Peilsatelliten 30, 30', 30", 30"' auch die bekannte Position mindestens einer terrestrischen Sende- und Empfangsstation, wie z.B. einer stationären Peilantenne 31' benützt und mit den ermittelten Satellitenwerten zu Korrekturwerten verarbeitet wird, woraus sich dann die genaue Position des Mobilteiles 1"' bzw. des damit ausgestatteten Fahrzeuges oder Gerätes oder der benützenden Person, ermitteln und unter anderem ggf. auch auf dessen Display 16' darstellen läßt. Per Funkverbindung 32' erfolgt hierbei die Übermittlung vom und zum Mobilteil 1"'. Die Eingabeeinheit 15' ist hierbei im wesentlichen in einer aufklappbaren zweiten Ebene über dem durchgehenden Display 16' angeordnet. Sie kann aber auch im Display 16' selbst sein.
Da die zu den **Figuren 5 und 6** beschriebenen Mobilteile 1", 1'" konstruktiv mindesten um aktive Peil- und Sendesysteme erweitert wurden, sind sie als interaktive Komponenten der vorgeschlagenen Notfall- und Sicherheitssysteme einsetzbar und können mit externen Geräten, mit "Partnergeräten" und/oder mit regionalen Sendern und/oder Empfängern 42, 42' im Sinne der vorgeschlagenen Systeme kommunizieren.

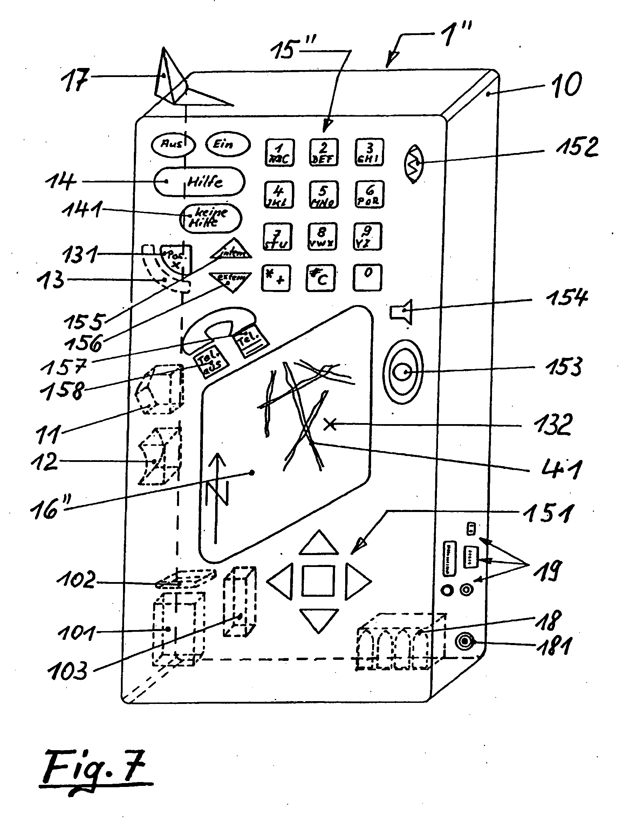

**Figur 7** zeigt schematisch ein Mobilteil 1"" für ein vorschlagsgemäßes System, das nach der Art eines an sich bekannten "Work-Pad" oder eines "W@P - Phone"-Handys gestaltet ist und das ggf. auch einem solchen Gerät als Basiselement entsprechen kann, wobei in und an dessen, vorzugsweise wasserdichtem und bruchfestem, Gehäuse 10, ein interaktiven Sender 11 und ein interaktiven Empfänger 12 sowie eine interaktive Peilkomponente 13 und eine Sende- und Empfangs-Antenne 17 ebenso erkennbar ist, wie eine Notruftaste 14, eine Eingabeeinheit 15", ein Display 16", zur Daten- und Bilddarstellung und eine Positionstaste 131 zur sofortigen Positionsbestimmung, z.B. mittels Positionspunkt 132 im Display 16". Vorteilhafterweise wird die jeweils zur geographischen Lage passende Landkarte oder Route 41 in geeignetem Maßstab aus externen Speichern oder Datensystemen aktuell zu geschaltet oder, z.B. via Internet, abgerufen. Mit Batterien 18 oder mit Akkumulatoren, lässt sich bei mobiler Nutzung die Energieversorgung sicherstellen, sofern nicht über einen Stromanschluss 181 anderweitige Energiequellen in Fahrzeugen oder in Gebäuden genutzt werden können. Über verschiedenartige Anschlüsse 19, z.B. als USB-, parallele, serielle oder Infrarot-Schnittstelle, lassen sich ggf. auch externe Tastaturen, Bildschirme, Drucker, Laufwerke oder sonstige Zusatzgeräte anschließen. Mit Hilfe einer ggf. vorhandenen und verbindbaren Dockingstation lassen sich, insbesondere in Gebäuden oder in Fahrzeugen, periphere Zusatzgeräte wie externe Bildschirme, Tastaturen, Maus, und Stromversorgung leicht und direkt mit dem Mobilteil verbinden. Über "HotSync" (Data-Synchronisation) -Systeme und - Verbindungen lassen sich - mittels ggf. angeschlossenem W@P (Wireless-Application-Protocol)-Handy, sofern nicht eingebaut - per Internet oder von der Basisstation, Pläne und sonstige Grunddaten einspielen oder Übermitteln, während die Bauteile für Standardfunktionen, wie Datum, Uhrzeit, Kalender, Alarm, Adressbuch u.ä. als Grundfunktionen in der Regel, im Mobilteil selbst angeordnet sind. Ein zusätzlicher Höhenmesser sollte vorteilhafter weise ebenfalls integriert sein, sofern er nicht sowieso bereits Bestandteil des Navigationssystem ist.
Mit der Steuereinheit 151 werden Systemsteuerungen ausgelöst und Wechsel oder Verschiebungen der Displayanzeigen bewirkt. Die Eingabeeinheit 15" weist sowohl numerische als auch alphanumerische Eingabemöglichkeiten auf. Zur akustischen Ein- und Ausgabe von Daten und Informationen ist ein Mikrophon 152 und ein Lautsprecher 153 vorgesehen, deren Ansteuerung und Zuschaltung über eine Akustik-Taste 154 oder auch nur phonetisch durch eine bestimmte Wortwahl erfolgen kann.
Der lokale hochwertige Mobilteil-Rechner 101 ist mit einem relativ großen internen Speicher 102 gekoppelt und wird über die Interntaste 155 aktiviert, sofern er nicht automatisch bei bestimmten Signalen oder Ereignissen aktiviert wird oder generell aktiv ist. In diesem Fall dient die Externtaste 156 zum ausschalten des Rechners 101. Externe Verbindungen und Dateneingaben werden dann durch die Betätigung der Externtaste 156 zu- oder abgeschaltet. Ein zusätzlicher Kommunikationsprozessor 103 und ggf. zusätzliche Software bewirken die permanente interaktive Kommunikationsfähigkeit und verbessern die Leistungsfähigkeit des Mobilteils 1 "" und damit auch des gesamten Systems.

Das erfindungsgemäße universelle **Kommunikationssystem** mit stationären und mobilen Elementen, **mit Sendeanlage, mit Peilsystem und mit mindestens einem** transportablen **Mobilteit** 1,1', 1", 1"', 1"", ist insbesondere als (SK) Kommunikations-, (SI) Informations- und (SN) Navigationssystem ausgebildet und verwendbar. Das System arbeitet mit traditionellen und/oder mit modernsten Navigations- und Übertragungsstandards und/oder mit sonstigen verfügbaren Kommunikations- oder Übertragungs-Mitteln und/oder -Anlagen. Insbesondere z.B. mit Navigationsstandards wie "GPS", "DGPS", "GSM", "GSM", "GNSS", "EGNOS", "Galileo^{®}" sowie mit aktuellen Mobilfunk-Standard, mit Kurz- Ultrakurz-, Mittel- oder Langwellen Amateurfunk oder Rundfunk - Standards, mit Infrarot- oder mit Ultraschall-Übertragungstechnik, mit "Mini-Funksystemen", mit "GPRS"-, mit "UMTS", Internet, W@P-Standards, PDA-Multimedia-Card-Standard, "SMS", Multimedia, "Voice" und ähnliche Übertragungssysteme, mit "WAP", "PDA", "WLAN", "EWAN", "RIMS", "PBCC", "OFDM", "WiFi", "Bluetooth®" und/oder gegebenenfalls mit sonstigen verfügbaren Kommunikations-und /oder Obertragungs-Systemen und besteht hauptsächlich aus einem Rechner, einem Kontrollsystem, mindestens einem Peilsystem, wie z.B. Peilsatelliten mit Referenzstation(en) und/oder terrestrischen Peilstationen mit Antennenanlagen und mindestens einem Mobilteil und ggf. sonstigen Komponenten sowie entsprechender Software.
Vorschlagsgemäß soll es zusätzlich als NotfallSystem (SN) und als Sicherheitssystem (SS) ausgebildet sein. Zur **Ausstrahlung** und/oder zur **Aufnahme** aktueller, insbesondere auch regionaler, **Informationen 60, Warnungen 61** und/oder sonstiger aktueller und/oder regionaler Daten oder Meldungen 6 sollen, global und/oder regional, geeignete Sende-und/oder Empfangsanlagen 4; 41, 41', 41"; 42, 42', 42", 42"' vorhanden und einsetzbar sein.

Für derartige Kommunikationssysteme ist das vorschlagsgemäße **Mobilteil** 1, 1', 1", 1"', 1"" als universelles Kommunikationsgerät für wechselseitigen Datenaustausch und als Positionierungsgerät, bzw. als kombiniertes **Empfangs-, Sende- und Ortungsgerät** ausgebildet und weist Mittel auf, womit aktuelle und/oder regionale **Informationen 60, Warnungen 61** und/oder sonstiger Daten oder Mitteilungen 6 von den Sende- und/oder Empfangsanlagen 4; 41, 41', 41"; 42, 42', 42", 42'" **empfangen** und/oder an diese **weitergeben** und ggf. auch intern **verarbeitet** werden können.

Das Mobilteil 1, 1', 1", 1"', 1"")bildet hierbei eine transportable, aktive und/oder interaktive Kommunikationseinheit, für wechselseitigen Signal- und Datenaustausch und ist als Ortungs-, Notfall und/oder Sicherheitsgerät gestaltet und einsetzbar, insbesondere auch als Mobiltelefon, Navigations- und Ortungsgerät, als Handheld und/oder als sonstiges leicht transportables Sende- und Empfangsgerät, und weist Mittel auf, zum manuellen und/oder automatischen Empfangen, Speichern, Verarbeiten, Auswerten und/oder Wiedergeben aktueller und/oder regionaler Informationen, Warnungen und/oder sonstiger Daten 6 oder Mitteilungen. Insbesondere auch zum automatischen Empfangen, Laden, Verarbeiten und/oder Weiterleiten aktueller und/oder regionaler Informationen, Pläne und Daten 6, wie:
Routenpläne, Daten zur geographischen Beschaffenheit des aktuellen Geländes, Sturm- oder Lawinenwarnungen, Unfallmeldungen, Streckenempfehlungen, Wetter- oder Suchmeldungen und/oder sonstiger relevanter Situationsdarstellungen.
Im interaktiven Datenaustausch werden Daten des Mobilteils 1, 1', 1", 1"', 1"" an regionale Stationen, fremde Empfänger und/oder an ggf. zugeschaltete weitere Mobilteile 1, 1', 1", 1"', 1"" weitergegeben und/oder von dort kommende Daten empfangen und intern verarbeitet.

Mobilteile 1, 1', 1", 1"', 1"" für universelle Kommunikationssysteme, die als (SK) Kommunikations-, (SI) Informations- und (SN) Navigationssysteme und zusätzlich als Notfall-Systeme (SN) und/oder als Sicherheitssysteme (SS) ausgebildet sind, sollen zur Ausstrahlung und/oder zur Aufnahme aktueller, insbesondere auch regionaler, Informationen, Warnungen und/oder sonstiger aktueller und/oder regionaler Daten oder Meldungen geeignet sein. Die Systeme arbeiten hierbei mit traditionellen und/oder mit modernsten Navigations- und Ubertragungsstandards und/oder mit sonstigen verfügbaren Kommunikations- oder Übertragungs-Mitteln und/oder -Anlagen und bestehen hauptsächlich, bzw. üblicherweise aus einem Navigations-System, einem Peilsystem, einem Informationssystem, einem Kommunikationssystem, einem Rechner, einem Kontrollsystem und mindestens einem Mobilteil sowie ggf. sonstigen Komponenten und entsprechender Software.

Die Mobilteilen 1, 1', 1", 1"', 1"" sollen vorschlagsgemäß Mittel aufweisen, zum gegenseitigen Datenaustausch, zur Kommunikation und/oder zur Ortung durch und von globalen und/oder regionalen Sende- und/oder Empfangsanlagen (4) und/oder von und mit gleichartige(n) "Partner-Mobilteilen", d.h., **weiteren Mobilteilen** 1, 1', 1", 1"', 1"" untereinander und/oder von oder mit regionalen Notrufstationen, Funkstationen und/oder sonstigen Sendern und/oder Empfängern.

Zur Optimierung als Sicherheitssystem sollen die **Mobiltelle** 1, 1', 1", 1"', 1"" **Vorrichtungen und Mittel** aufweisen, **zur** automatischen **Warnung und Alarmierung des Trägers** nach Empfang bzw. Eingang entsprechender, insbesondere sicherheitsrelevanter Meldungen oder Informationen **beim Erreichen gefährdeter Gebiete,** zur Vermeidung von Notfällen durch rechtzeitige Warnung und Auslösung eines sogenannten "Zonenalarm".

Rettungsdienste, Notfallstationen und/oder "Partner-Mobilteile" 1, 1', 1", 1"', 1"" sollen nach Eintritt einer akuten Notsituation bzw. eines Notfalls bei einem oder bei mehreren der Mobilteilnutzer durch geeignete Vorrichtungen und Mittel manuell und/oder automatisch alarmiert werden können.
Die Mobilteile sollen ggf. auch Mittel aufweisen, zum Verarbeiten der eingehenden Informationen und Warnungen und zur Erstellung und Anzeige und/oder zur Ausgabe aktueller Routenvorschläge im 2D- und/oder im 3D-Format.
Zudem sollen sie ggf. auch Mittel aufweisen, zum Aufnehmen und zum speichern von insbesondere per Funk-, Ultraschall- oder Infrarot-Übertragung erhaltener aktueller, regionaler Daten, zu deren Erfassung, Speicherung und zur manuellen oder automatischen, ggf. zeitlich und/oder örtlich versetzten Wiedergabe an, z.B. ortsversetzte, Fremdgeräte, insbesondere an globale und/oder regionale Sende- und/oder Empfangsanlagen 4; 41, 41', 41"; 42, 42', 42", 42'". Dies können z.B. Masten oder Stationen von Seilbahnen ebenso sein wie Wetterstationen, "normale" Rundfunk- oder Mobilfunk -Stationen oder Sendemasten oder Antennenanlagen sonstiger Art.
Ein vorschlagsgemäßes Mobilteil 1, 1', 1", 1"', 1"" enthält mindestens einen Sender 11, einen Empfänger 12, eine Peilkomponente 13 einen leistungsstarken Mobilteil-Rechner 101, einen großen Speicher 102 und Mittel 14 bis 19, mit deren Hilfe es mit einer Kontrollstation 2 bzw. mit einer zugehörigen Basisstation 21 und/oder mit einem Peilsystemen 3, sowie ggf. auch mit regionalen Notfall-Rettungs-Systemen direkt kommunizieren kann und Mittel, mit denen es
von diesen Systemen, von sonstigen Anlagen und/oder von "Partnergeräten" aus direkt oder indirekt angepeilt und geortet werden kann, im Sinne der sogenannten "Kameradenrettung". Zur Erzielung und Verbesserung der erforderlichen Leistungsfähigkeit ist im Mobilteil vorzugsweise auch ein Kommunikationsprozessor 103 integriert, der vor allem auch die ständige Aktionsbereitschaft und den automatischen Datentransfer verbessern und/oder sicherstellen kann.

Zur Aktualisierung der vorhandenen Datenbestände, Pläne, Routen u.s.w. soll das Mobilteil 1, 1', 1", 1'", 1"" mindestens eine manuelle und/oder automatische Eingabeeinheit 15 und ggf. weiter Eingabemittel aufweisen, insbesondere zur individuellen Neuprogrammierung, zur Ergänzung oder Änderung eingegebener Routenpläne 41 oder Profilvorgaben und/oder sonstiger Befehle und Daten, durch manuelle Dateneingabe und/oder durch automatische Einspielung. Dies ist vor allem bei Änderungen vorgeplanter Routen oder z.B. zur Berücksichtigung erfolgter Straßenbaumaßnahmen erforderlich oder zweckmäßig.
Die Erstellung und Ausgabe neuer Routenpläne u.ä. soll ggf. unter Berücksichtigung der erhaltenen aktuellen Informationen erfolgen. Zur, ggf. akustischen, Systemsteuerung und/oder zur manuellen oder automatischen Daten-Ein- und/oder -Ausgabe und/oder zur Daten-Bearbeitung generell, soll die Eingabeeinheit 15 des Mobilteils 1, 1', 1", 1"', 1"" ein Empfangs- und Erfassungsteil, eine interne oder externe Tastatur und/oder ein Sprachmodul mit Sprach-Erkennungsprogramm, Mikrophon 152 und mit Lautsprecher 153 aufweisen oder sein.

Das Mobilteil 1, 1', 1", 1"', 1"" soll auch mindestens eine, ggf. gesicherte, direkte Notruftaste 14 und/oder ein sonstiges mechanisches, manuelles, optisches oder akustisches Auslösemittel aufweisen, zur Absendung mindestens einer Information, insbesondere auch zur Auslösung eines Notrufsignals. Zur Vermeidung von Fehlalarm kann die Auslösung eines Notrufes ggf. auch erst nach mehrmaligem Betätigen, z.B. nach dreimaligem Drücken der Notruftaste 14, erfolgen oder das System anderweitig gesichert sein. Zudem kann, z.B. durch integrierte oder durch externe Prüf- oder Sperrsysteme, Vorsorge gegen Missbrauch von Notrufsystemen getroffen werden.

Vorteilhafter weise soll das Notrufsignal und die Positionsangabe des jeweiligen Standortes gemeinsam oder in unmittelbarer Folge gesendet und/oder weitergeleitet werden können. Hierfür kann das Mobilteil 1, 1', 1", 1"', 1"" einen internen Mobilteil-Rechner 101, Geräte, Schaltungen, Programme und/oder sonstige Mittel oder Vorrichtungen aufweisen, mit deren Hilfe beim Auslösen des akuten Notrufsignals die Positionsangabe des jeweiligen Standortes - ggf. bis zu einem halben Meter genau - automatisch ermittelt und mit dem Notrufsignal, gemeinsam oder in unmittelbarer Folge, gesendet, empfangen und/oder weitergeleitet werden kann.
Zusammen mit dem eingehenden Notruf sollte dann beim Empfänger, neben dessen eigenem Standort, und dem zutreffenden Lageplan, die relevante Position des Hilfesuchenden, ggf. mit "Vorrangschaltung, aktiviert und in dessen Display angezeigt werden. Hierdurch ist auch für Verschüttete ein sehr effektives und schnell wirksames Rettungssystem gegeben.
Zur gegenseitigen Kommunikation und Notfallinformation, insbesondere innerhalb einer Gruppe und/oder zwischen sonstigen Partnerschaften soll jedes "zugehörige" Mobilteil 1,1', 1", 1"', 1"" "systemkonform" sein und Mittel oder Vorrichtungen aufweisen, mit deren Hilfe mehrere, systemgleiche "Partner-Mobilteile" 1, 1', 1", 1"', 1"" gegenseitig Notrufe empfangen, miteinander auch "notfallspezifisch" kommunizieren und sich gegenseitig positionieren und orten können. Wenn sich die Teilnehmer einer Gruppe gegenseitig rufen, orten und helfen können, ist im Sinne der "Kameradenhilfe" besonders schnelle Hilfe vor allem auch dann möglich, wenn nicht alle Teilnehmer einer Gruppe verunglückt oder in Gefahr geraten sind. Zur schnellen persönlichen Orientierung soll der Peilkomponente 13 des Mobilteils 1, 1', 1", 1'", 1"" bevorzugt mindestens eine Positionstaste 131 zugeordnet sein, mit der die sofortige Abrufung des augenblicklichen Standortes in einem vorgegebenen Koordinatensystem oder auf einer verfügbaren Landkarte 41, im 2D- oder vorzugsweise im 3D-Format, möglich ist. Als Orientierungsgrundlage können vorab eingegebene zwei- oder dreidimensionale Lagepläne oder Pistenprofile ebenso dienen, wie vor Ort erfassbare und nachträglich einzugebende Gebietsprofile, Streckenpläne oder Messpunkte, deren Koordinaten bekannt oder ggf. auch unmittelbar bestimmbar sind. Hierdurch lassen sich vor allem auch tatsächlich gegangene Wanderrouten oder Fahrt- oder Flugstrecken eindeutig festlegen und/oder nachvollziehen.

Das vorgeschlagene Mobilteil 1, 1', 1", 1"', 1"" soll Mittel aufweisen, mit deren Hilfe Navigationsstandards wie "GPS", "DGPS", "GSM", "GSM", "GNSS", "EGNOS", "Galileo^{®}", (D)GPS-Signale, herkömmliche digitale oder analoge Telefonsignale und/oder UMTS-Signale empfangen, verarbeiten und/oder wiedergeben werden können.
Zudem soll es Mittel aufweisen, mit deren Hilfe Daten und/oder Signale der Systeme: "EGNOS^{®}", "Galileo", "Btuetooth^{®}", / W@P-Standards, PDA-Multimedia-Card-Standards und/oder andere Standards oder Anwendungen wie: SMS, Multimedia, "Voice", WAP-Protocol, PDA, WLAN, EWAN, RIMS, PBCC, OFDM, WiFi, (D)GPS-Signale, Infrarot-Signale, herkömmliche digitale oder analoge Telefonsignale, UMTS-Signale und /oder Funksignale spezieller oder verschiedener Frequenzen empfangen, verarbeiten und wiedergeben werden können. Damit sollen die Systeme und Mobilteile auch in Gegenden mit unterschiedlichen Standards möglichst umfassend wirksam und funktionsfähig sein.
Welcher Navigations-Standard, welches Peilsystem, welches Informationssystem und welche Übertragungstechniken einzeln und/oder kombiniert gewählt werden, ist einerseits von den in der vorgesehenen Zielregion bevorzugten oder überhaupt verfügbaren Systemen und zum anderen von der Qualität, dem Preis und der Gesamtausstattung des universellen Kommunikationssystems und/oder des jeweiligen Mobilteils 1, 1', 1", 1"', 1"" abhängig. Da die technischen, konstruktiven und auch finanziellen Möglichkeiten zur Abdeckung aller oder möglichst vieler Standards begrenzt sein können, wird zweckmäßiger weise stets eine Kompromisslösung zu suchen sein, um geeignete, gute und optimale Systeme und Komponenten, wie z.B. die Mobilteile 1, 1', 1", 1"', 1"", zu erhalten.
So kann ein entsprechendes Mobilteil 1, 1', 1", 1"', 1"" Mittel aufweisen, mit deren Hilfe sowohl (D)GPS-Signale als auch herkömmliche digitale oder analoge Telefonsignals, UMTS-Signale und/oder auch Kurz-, Ultrakurz- Mittel- oder Langwellen- bzw. Amateur-, Minifunk- oder sonstige Rundfunksignale empfangen, verarbeitet und/oder wiedergeben bzw. gesendet werden können. Ebenso können vorteilhaft im Mobilteil 1, 1', 1", 1"', 1"" auch Mittel, Vorrichtungen und/oder Programme verfügbar sein, mit deren Hilfe Internet- und/oder Intranet-Kommunikation ermöglicht wird, bzw. erfolgen kann, wie z.B. mit "i-mode" Handys mittels W-CDMA-System, das für "Wideband Code Division Multiple Access" steht. Alternative Nutzungsmöglichkeiten unterschiedlicher Navigations- und Übertragungs-Standards sind vor allem in Gegenden mit unterschiedlichen verfügbaren Standards erforderlich, zur umfassenden Funktionsfähigkeit der vorgeschlagenen Systeme und Mobilteile 1, 1', 1", 1"', 1"" und insbesondere auch dann, wenn deren möglichst universelle Nutzungsmöglichkeit gegeben sein soll.
Zur weiteren und optimierten Nutzung vorschlagsgemäßer Mobilteile 1, 1', 1", 1"', 1"" können diese auch Mittel, Elemente, Anschlüsse und/oder sonstige Teile aufweist, mit deren Hilfe weitere Hilfsmittel wie externe Tastaturen, Pads , Bildschirme, Drucker, Laufwerke und/oder sonstige Peripheriegeräte angeschlossen und/ oder betrieben werden können.

Werden dem Mobilteil 1, 1', 1". 1"', 1"" bildvergrößerndeAufsätze oder Bildschirme zugeordnet, dann sind sie vor allem für Auto-, Rad- oder Bootsfahrer - oder auch für Flieger und/oder im "stationären" Heimgebrauch, besonders gut verwendbar.

Im Mobilteil selbst oder über externe Rechner oder Datenbanken lassen sich auch wichtige persönliche Daten speichern und/oder kurzfristig abrufen oder zuschalten und ggf. auch sofort mit einem Notruf weitergeben, zur schnellen Diagnose und zur Information über persönliche Besonderheiten des Benützers, wie z.B. bestehende Diabetes, vorhandener Herzschrittmacher, Allergien, Bluterkrankheit, sonstige Unverträglichkeiten u.s.w. Daten und Informationen, die zur Erstbehandlung wichtig sind, um gravierende Behandlungsfehler zu vermeiden.
Wenn keine regionalen Rettungsdienste bestehen und/oder diesen keine speziellen Personendaten Verunglückter kurzfristig zugänglich sind, kann ggf. auch gleichzeitig mit dem Notruf ein externes "Notrufzentrum" angesteuert werden, bei dem die Benützer- (Patienten-) Daten gespeichert vorliegen und dessen Zugangsnummer eingespeichert vorliegt und ebenfalls automatisch weitergegeben oder angewählt wird. In gleicher Weise können so auch Angehörige verständigt und/oder "zugeschalten" werden.
Die Verwendung eines vorgeschlagenen Systems und/oder mindestens eines dargestellten Mobilteils 1, 1', 1", 1"', 1"" für Sicherheits-, Informations- und/oder Navigationssysteme, als Kommunikations-, Übertragungs-, Orientierungs-, Sicherheits- und/oder Notrufsystem ist vorteilhaft vorgesehen und geeignet, insbesondere für Wanderer, Spaziergänger, Jogger, Kinder, ältere Menschen, Kranke, Behinderte, Bedrohte, ebenso wie für Skiwanderer, Skifahrer, Snowboarder, Tourengänger, Kletterer, Bergwanderer, Autofahrer, Radfahrer, Bootsfahrer, Ballonfahrer und/oder für Flieger aller Art.
Alternativ oder gleichzeitig eignen sich die vorgeschlagenen Systeme und Mobilteile 1, 1', 1", 1"', 1"" auch sehr gut als Obertragungs-, Ortungs-, Orientierungs-, Sicherheits- und/oder Alarmsystem für die Objektsicherung, als Diebstahlschutz für Fahrzeuge und Boote aller Art und/oder als Personenschutz-Hilfsmittel zur Wiederauffindung Entführter oder Verlaufener.

Bei der Verwendung des vorgeschlagenen Systems und/oder mindestens eines vorschlagsgemäßen Mobilteils 1, 1', 1", 1"', 1"" als Vorrichtung zum Aufnehmen und zum speichern von insbesondere auch per Funk wiedergegebener und/oder erhaltener aktueller, regionaler Daten, zu deren Aufnahme, Speicherung und manuellen und/oder automatischen, ggf. zeitlich und örtlich versetzten, Wiedergabe, z.B. an ortsversetzte Fremdgeräte, ggf. auch im Rahmen regionaler funkgestützter drahtloser Netzwerke, mittels eines oder mehrerer Mobilteile 1, 1', 1", 1"', 1"", dienen diese ggf. auch zur Bildung und/oder zur Schaffung relativ einfacher und kostengünstiger interaktiver, bzw. bi-direktionaler Informationstransfer-Systeme und können ggf. sehr teuere terestische oder verkabelte Anlagen ersetzten. Derartige Systeme können daher auch besonders günstig in regionalen Gebieten - insbesondere z.B. auch in Bergregionen oder im Gebirge selbst - eingesetzt werden. In Gegenden somit, die sonst mit herkömmlichen Systemen nicht versorgt werden können.

Die vorgeschlagenen Systeme und/oder die zugehörigen Mobilteile 1, 1', 1", 1"', 1"" eignen sich somit vorzugsweise auch zum Aufnehmen und zum speichern von insbesondere per Funk wiedergegebener und/oder erhaltener aktueller, regionaler Daten, zu deren Aufnahme, Speicherung und Wiedergabe, wobei ein oder mehrere Mobilteil(e) 1, 1', 1", 1"', 1"", aktuelle Daten eines Senders mit z.B. geringer Reichweite in deren Nähe übernehmen und an einen externen Empfänger nach dessen Erreichen und in dessen Nähe wieder abgeben, im Rahmen eines interaktiven bzw. bi-direktionalen Informationstransfer-Systems.
Dies kann z.B. dadurch geschehen, dass ein Skifahrer den als Sender und Empfänger ausgestatteten Masten einer Liftanlage bei der Talfahrt passiert, von diesem Masten Daten empfängt, diese automatisch aufnimmt und speichert und beim passieren des nächsten Mastens sie an diesen wieder automatisch weitergibt.
Ob und in welchem Umfang diese Daten dann auch vom "Transfergerät" selbst noch verarbeitet und/oder ausgewertet werden, hängt von deren Art und Bedeutung für den Nutzer des Mobilteiles 1, 1', 1", 1"', 1"" ab, das hierbei das "Transfergerät" darstellt, sowie ggf. auch von der jeweiligen technischen Ausstattung des entsprechenden Mobilteils 1, 1', 1", 1"', 1"" selbst.
Zweckmäßiger weise sollten das Aufnehmen und Speichern der, insbesondere per Funk, übermittelten aktuellen, regionalen Daten durch das oder die Mobilteil(e) 1, 1', 1", 1"', 1"" und/oder die Weitergabe an einen oder mehrere exteme(n) Empfänger 41, 41', 41"; 42, 42', 42" vom Mobilteil(e) 1, 1', 1", 1"', 1"" vollautomatisch erfolgen.

Grundsätzlich eignen sich die vorgeschlagenen Systeme und Mobilteile 1, 1', 1", 1"', 1"" mit geeigneter Hard- und Software-Ausstattung und/oder mit passenden "Links" zu stationären Rechnern, zusätzlich auch vorteilhaft zur automatischen Aufzeichnung von aktuellen Daten, Wegstrecken, Höhen, Gefälle, Routen und Pisten sowie zur Auswertung dieser Daten zur Leistungsermittlung, für Wettbewerbe und/oder für Vergleiche mit gleichartigen Werten Dritter und/oder zur Rückverfolgbarkeit zurückgelegter Strecken oder Routen des Benützers. Messungen und/oder Berechnungen können dann nach verschiedenen Parametern, z.B. auch nach gefahrenen oder gelaufenen Strecken, Geschwindigkeiten, Höhendifferenzen, Kalorienverbrauch oder sonstigen Leistungen ebenso erfolgen wie Vorplanungen für Zeitplanungen, Konditionsbedingungen und/oder erforderliches Können für geplante Touren oder Fahrten.
Als geeignete Mittel zur Erfüllung der erforderlichen Aufgaben dienen marktübliche oder spezielle Rechner, Sender, Empfänger, Peilkomponenten und/oder sonstige frei auf dem Markt verfügbare Hard- und Software-Komponenten. Bei geeigneter Dimensionierung enthält das Mobilteil 1, 1', 1", 1"', 1"" den gesamten Rechner, ebenso wie die gesamte Sende- und Empfangsanlage und die zur Navigation und zur Standortbestimmung erforderlichen Hard- und Software-Komponenten.
Das Display, bzw. der Bildschirm kann sowohl neben als besonders vorteilhaft auch in einer zweiten Ebene unter oder über der Bedienungs-Tastatur angeordnet sein. Externe Bildschirme oder sonstige Bildvergrößerer sind ggf. ebenfalls vorteilhaft verwendbar.
Größere Bauteile oder sonstige externe Hilfsmittel, wie z.B. Drucker, Laufwerke, Pad's usw., können aber auch ausgelagert sein und als mobiles Zusatzgerät oder als stationäres Element z.B. per Funk, Infrarot. Ultraschall u.ä. angesteuert und bedarfsweise aktiviert werden. Die Verbindung zwischen dem Mobilteil und dem Internet (Anbieter) kann vorzugsweise auch mit einer sogenannten "Funkkarte" hergestellt werden, die dem Mobilteil zugeordnet werden kann und mit der die Verbindung zu einem Zugangsanbieter aufgenommen wird.
Der eigene Standort kann vorteilhaft als x/y-Koordinatenwerte ebenso wie in einem auf dem Display angezeigten Lageplan als Fadenkreuz, Pfeilmarke, Farbmarkierung, Leuchtpunkt oder als Blinkanzeige dargestellt werden und muss elektronisch erfasst und übermittelbar sein.

**Zusammenfassend** wird somit ein Kommunikationssystem vorgeschlagen, das Navigations-, Positions-, Informations-, Notfall- und Sicherheitssystem in sich vereint, wobei das System vorzugsweise mit Navigations- und Übertragungs-Standards oder modernsten Techniken hierfür arbeitet. **Das System weist** zudem, global und/oder regional, **geeignete Sende- und Empfangsanlagen auf, zur Ausstrahlung und zur Aufnahme aktueller,** insbesondere regionaler Informationen, **Warnungen** 61 und/oder sonstiger Daten 6 oder Meldungen, wobei **das Mobilteil** 1, 1', 1", 1"', 1" diese Daten und Meldungen, ggf. wechselweise, von den Sende- und/oder Empfangsanlagen **empfangen** und/oder an diese **weitergeben** kann. Hierfür weist das Mobilteil 1, 1', 1", 1"', 1"" unter anderem Mittel auf, zum automatischen Empfangen Laden und/oder Verarbeiten aktueller und/oder regionaler Meldungen oder Informationen, wie z.B. Routenpläne, Daten über geographische Beschaffenheiten, **Lawinenwarnungen,** Streckenempfehlungen, **Wetter- oder Suchmeldungen** und/oder sonstiger Situationsdarstellungen. Außerdem soll das Mobilteil 1, 1', 1", 1"', 1"" unter anderem Mittel aufweisen, zum gegenseitigen Datenaustausch oder zur Kommunikation und/oder zur Ortung durch und von gleichartige(n), weitere(n) Mobilteile(n) 1, 1', 1", 1"', 1"" untereinander und/oder von oder mit regionalen Funkstationen und/oder sonstigen Sendern und/oder Empfängern. Vorzugsweise zudem auch Vorrichtungen und Mittel, zur automatischen **Alarmierung des Trägers,** nach automatischem Eingang entsprechender **Warnungen** oder **Informationen** sowie auch Vorrichtungen und Mittel zur manuellen und/oder zur automatischen **Alarmierung einer Notrufstation,** nach Eintritt einer akuten Notfallsituation. Von weiterem Vorteil ist es auch, wenn das Mobilteil unter anderem Mittel aufweist, zum Verarbeiten der eingehenden Informationen und Warnungen und zur Erstellung und Ausgabe aktueller Routenvorschläge, unter Berücksichtigung der aktuellen Informationen.
Ein wesentlicher Vorteil des vorgeschlagenen Systems ist auch darin zu sehen, dass bei geeigneter Infrastruktur derartige Mobilteile 1, 1', 1", 1"', 1"", als Obertragungsvorrichtungen dienen, zum Aufnehmen und speichern von insbesondere per Funk wiedergegebener und/oder erhaltener aktueller, regionaler Daten, zu deren Aufnahme, Speicherung und manuellen oder automatischen, ggf. zeitlich und örtlich versetzten, Wiedergabe, z.B. an ortsversetzte Fremdgeräte, ggf. auch im Rahmen regionaler funkgestützter drahtloser Netzwerke dienen können und zur Bildung bidirektionaler Informationstransfer-Systeme dienen und beitragen können. Bei vorhandener, geeigneter Infrastruktur und kartographischer Ausstattung, d.h., besonders bei vorhandene stationären Sende- und Empfangsanlagen, entsprechender Software, bestehendem Informationsservice, und bei ausreichend vorliegenden geographischen und topographischen Plänen (Map's), vorzugsweise in 3D-Geländekarten, ist das vorgeschlagene System insbesondere auch in unwegsamem Gelände, in Bergregionen oder in sonstigen Gegenden, die z.B. auch im "Funkschatten" üblicher Sendesysteme liegen, besonders vorteilhaft einsetzbar. Das System kann z.B. auf Skipisten Anwendung finden, wenn abfahrende Skifahrer aktuellste Informationen von einem Mast einer Seilbahnstation zum anderen weitergeben und/oder aufnehmen. Besonders günstig ist es auch, wenn mindestens ein Mobilteil als Vorrichtung zum Aufnehmen und zum speichern von insbesondere per Funk wiedergegebener und/oder erhaltener aktueller, regionaler Daten, zu deren Aufnahme, Speicherung und Wiedergabe dient.
Das vorgeschlagene System und die hierfür verwendeten Mobilteile 1, 1', 1", 1"', 1"" ergeben somit **Schutz** und **Prevention,** durch **vorbeugende und akute Warnungen.** Auch schnelle **Hilfe** und **Rettung** wird ermöglicht, durch die Notfalleinrichtungen im System und am Mobilteil und in Verbindung mit den automatischen Positionsbestimmungen und Positions-Meldungen.

### Positionen:

**1.1'. 1", 1"', 1"" Mobliteil und "Partner-Mobilteile".**
   **10** Gehäuse, **101** Mobilteil-Rechner, **102** Speicher, **103** Kommunikationsprozessor,
   **11** Sender, **12** Empfänger, **13** Peilkomponente(n),
      **131** Positionstaste, **132** Positionspunkt im Display / aktuelle Standort-Anzeige,
   **14** Notruftaste, **141** Anullierungstaste,
   **15, 15', 15"** Eingabeeinheit für Zahlen, Buchstaben, Funktionen usw.,
      **151** Steuereinheit für Cursorbewegungen, Programm-Umschaltungen usw.,
      **152** Mikrophon, **153** Lautsprecher, **154** Akustik Taste,
      **155** Interntaste, **156** Externtaste,
      **157** Telefon-Einschalttaste, **158** Telefon-Ausschalttaste,
   **16,** 16', 16" Display,
   **17** Antenne, ggf. einklappbar oder anderweitig versenkbar,
   **18** Batterien, Akkumulator, **181** Stromanschluss / Ladegerät-Anschluss,
   **19** Anschlüsse für Zusatzgeräte / Schnittstellen;
**2 Kontrollstation: 21** Basisstation,
   **22, 22'** Basisrechner, zur Datenerfassung, **22"** Bildschirm zum Basisrechner,
   **23** Grunddaten-Profile; **24** Regionaldaten-Profile; **25** Warndaten-Profile;
**3 Peilsystem:**
   **30, 30', 30", 30"'** Peilsatelliten,
   **31 , 31'** Peilantennen = terrestrische PeilstationlPeilverstärker, ggf. m. Korrekturrechner;
   **32, 32'** Mobilfunknetz, **32"** Funkverbindung generell,
**4 Sende- und/oder Empfangsanlage** global und/oder regional
   **41, 41', 41"** globale/überregionaler Sender und/oder Empfänger,
   **42, 42', 42", 42"'** regionale Sender und/oder Empfänger
**5 Programme, Pläne und Software** a. A.
   **51** Landkarten, topographische Karten u.ä., Routenpläne, Notruflisten, Notrufpläne,
   **52** weitere Software und Planvorlagen, Betriebssysteme und Funktionssoftware.
**6 aktuelle/regionale Informationen, Pläne und Daten** aller Art:
   **60** Informationen, **61** Warnungen, **62** Unfallmeldung,
**7 Notruf: 71** Notfallmeldung (eigen), **72** Positionsangabe (eigen), **73** Standortsignal,
**8 Gebiet/Gelände, 80** erfasster Geländeabschnitt, **81** gefährdeter Bereich, **82** Notrufzone,
   **Systeme: SK = Kommunikations**system, **SN = Navigations**system,
   **SI = Informations**system, **SN = Notruf**system, **SS = Sicherheits**system.

## Patentansprüche

1. Universelles **Kommunikationssystem,** mit mindestens einem transportablen Mobilteil, als Kommunikations-, Informations- und Navigationssystem,
**wobei** das System mit Navigations- und Übertragungsstandards und/oder mit sonstigen verfügbaren Kommunikations- oder Übertragungs-Mitteln oder -Anlagen arbeitet und hauptsächlich aus einem Navigations-System, einem Peilsystem, einem Informationssystem, und mindestens einem Mobilteil, sowie gegebenenfalls sonstigen Komponenten und entsprechender Software besteht,
**wobei** das Mobilteil eine transportable interaktive Kommunikationsvorrichtung für wechselseitigen Signal- und Datenaustausch ist und als Ortungs-, Notfall- und Sicherheitsgerät gestaltet und einsetzbar ist, besonders auch als Mobiltelefon, Navigations- und Ortungsgerät, als Handheld oder als sonstiges, leicht transportables, Send- und Empfangsgerät,so dass es als Notfall-System und/oder als Sicherheitssystem wirken kann und das Mobilteil einen Rechner (101), ein Kontrollsystem und mindestens eine Eingabeeinheit (15) und Eingabemittel aufweist, zur individuellen Neuprogrammierung, zur Ergänzung oder Änderung eingegebener Routenpläne (41) oder Profilvorgaben oder sonstiger Befehle und Daten, durch manuelle Dateneingabe oder durch automatische Einspielung,
**wobei** globale oder regionale Sende- und Empfangsanlagen (4) vorhanden und einsetzbar sind, zur Ausstrahlung und zur Aufnahme von Lawinenwamungen oder aktuellen Wetterwamungen (61), ,
**wobei** das Mobilteil Mittel aufweist, womit lawinenwarnungen oder aktuelle Wetterwamungen (61) von den Sende- oder Empfangsanlagen (4, 41, 41', 41 ", 42, 42', 42", 42'") automatisch empfangen oder an diese weitergegeben, sowie gespeichert, verarbeitet und/oder ausgewertet werden können;
**wobei** das Mobilteil Mittel zur Ortung durch die globalen oder regionalen Sende- oder Empfangsanlagen (4) aufweist
**und wobei** das Mobilteil Mittel zur automatischen Positionsermittlung aufweist und damit feststellen kann, ob das Mobilteil sich in dem von Lawinenwamungen oder aktuellen Wetterwamungen gefährdeten Gebiet befindet und im Mobilteil einen akustischen und optischen Alarm auslöst.

2. **Mobilteil** für ein universelles Kommunikationssystem gemäß Anspruch 1,
**wobei** das Mobilteil Mittel aufweist, zum gegenseitigen Datenaustausch, zur Kommunikation und zur Ortung durch und von globalen oder regionalen Semde- oder Empfangsanlagen (4), von und mit gleichartigen "Partner-Mobilteilen", das heißt, weiteren Mobilteilen (1, 1', 1", 1'",
1 "") untereinander, von oder mit regionalen Notrufstationen, Funkstationen oder von sonstigen Sendern oder Empfängern,
**wobei** das Mobilteil eine transportable interaktive Kommunikationsvorrichtung für wechselseitigen Signal- und Datenaustausch ist und als Ortungs-, Notfall- und Sicherheitsgerät gestaltet und einsetzbar ist, besonders auch als Mobiltelefon, Navigations- und Ortungsgerät, als Handheld oder als sonstiges leicht transportables Sende- und Empfangsgerät und das Mobilteil einen Rechner (101), ein Kontrollsystem und mindestens eine Eingabeeinheit (15) und Eingabemittel aufweist, zur individuellen Neuprogrammierung, zur Ergänzung oder Änderung eingegebener Routenpläne (41) oder Profilvorgaben oder sonstiger Befehle und Daten, durch manuelle Dateneingabe oder durch automatische Einspielung,
**wobei** das Mobilteil Mittel aufweist, womit Lawinenwamungen oder aktuelle Wetterwamungen (61) von den Sende- oder Empfangsanlagen (4, 41, 41', 41", 42, 42', 42", 42"') automatisch empfangen oder an diese weitergegeben, sowie gespeichert, verarbeitet und/oder ausgewertet werden können,
wobei das Mobilteil Mittel zur Ortung durch die globalen oder regionalen Sende- oder Empfangsanlagen (4) aufweist
**und wobei** das Mobilteil Mittel zur automatischen Positionsermittlung aufweist und damit feststellen kann, ob das Mobilteil sich in dem von Lawinenwarnungen oder aktuellen Wetterwarnungen gefährdeten Gebiet befindet und im Mobilteil einen akustischen und optischen Alarm auslöst.

3. **Mobilteil** nach Anspruch 2, **dadurch gekennzeichnet,**
**dass** es Mittel aufweist, zum manuellen oder automatischen Empfangen, Laden, Verarbeiten und Wiedergeben aktueller und regionaler Informationen, Pläne und Daten (6), wie Routenpläne, Daten zur geographischen Beschaffenheit des aktuellen Geländes, Sturm- oder Lawinenwarnungen, Unfallmeldungen, Streckenempfehlungen, Wetter- oder Suchmeldungen oder sonstiger relevanter Situationsdarstellungen.

4. **Mobilteil** nach einem der Ansprüche 2 oder 3, **dadurch gekennzeichnet,**
**dass** es Mittel aufweist, zur manuellen oder zur automatischen Alarmierung einer Notrufstation und/oder weiterer "Partner-Mobilteile", nach Eintritt einer akuten Notsituation des Mobilteilnutzers.

5. **Mobilteil** nach einem der Ansprüche 2 bis 4, **dadurch gekennzeichnet, dass** es Mittel aufweist, zum Verarbeiten der eingehenden Informationen und Warnungen und zur Erstellung und Anzeige oder Ausgabe aktueller Routenvorschläge im 2D- oder im 3D-Format.

6. **Mobilteil** nach einem der Ansprüche 2 bis 5, **dadurch gekennzeichnet,**
**dass** es Mittel aufweist, zum Aufnehmen und zum speichern von insbesondere per Funk-, Ultraschall- oder Infrarot-Übertragung erhaltener aktueller, regionaler Daten, zu deren Erfassung, Speicherung und zur manuellen oder automatischen, gegebenenfalls zeitlich und/oder örtlich versetzten Wiedergabe an, zum Beispiel ortsversetzte, Fremdgeräte, insbesondere an globale oder regionale Sende- oder Empfangsanlagen (4; 41, 41', 41"; 42, 42', 42", 42'").

7. **Mobilteil** nach einem der Ansprüche 2 bis 6, **dadurch gekennzeichnet,**
**dass** es mindestens einen Sender (11), einen Empfänger (12), eine Peilkomponente (13) einen Mobilteil-Rechner (101), einen Speicher (102) und Mittel (14 bis 19) aufweist, mit deren Hilfe es mit einer Kontrollstation (2) beziehungsweise mit einer zugehörigen Basisstation (21), mit einem Peilsystemen (3), sowie gegebenenfalls auch mit regionalen Notfall-Rettungs-Systemen direkt kommunizieren kann **und dass** es von diesen Systemen, von sonstigen Anlagen oder von "Partnergeräten" aus direkt oder indirekt angepeilt und geortet werden kann.

8. **Mobilteil** nach einem der Ansprüche 2 bis 7, **dadurch gekennzeichnet,**
**dass** die Eingabeeinheit (15), ein Empfangs- und Erfassungsteil, eine interne oder externe Tastatur und/oder ein Sprachmodul mit Mikrophon (152) und mit Lautsprecher (153) aufweist, zur akustischen Systemsteuerung und zur manuellen oder automatischen Daten- Ein- oder - Ausgabe.

9. **Mobilteil** nach einem der Ansprüche 2 bis 8, **dadurch gekennzeichnet,**
**dass** es mindestens eine Notruftaste (14) oder ein sonstiges mechanisches, manuelles, optisches oder akustisches Auslösemittel aufweist, zur Absendung mindestens einer Information, insbesondere auch Mittel zur Auslösung eines Notrufsignals, wobei das Notrufsignal und die Positionsangabe des jeweiligen Standortes gemeinsam oder in unmittelbarer Folge gesendet und weitergeleitet werden.

10. **Mobilteil** nach einem der Ansprüche 2 bis 9, **dadurch gekennzeichnet,**
**dass** es einen internen Mobilteil-Rechner (101) und sonstige Mittel oder Vorrichtungen aufweist, mit deren Hilfe beim Auslösen des akuten Notrufsignals die Positionsangabe des jeweiligen Standortes automatisch ermittelt und mit dem Notrufsignal gesendet und weitergeleitet wird.

11. **Mobilteil** nach einem der Ansprüche 2 bis 10, **dadurch gekennzeichnet,**
**dass** es Mittel oder Vorrichtungen aufweist, mit deren Hilfe mehrere, insbesondere systemgleiche, "Partner-Mobilteile"(1, 1', 1",1"', 1"") miteinander kommunizieren und sich gegenseitig orten können.

12. **Mobilteil** nach einem der Ansprüche 2 bis 11, **dadurch gekennzeichnet,**
**dass** einer Peilkomponente (13) des Mobilteils (1, 1", 1", 1'", 1"") mindestens eine Positionstaste (131) zugeordnet ist, zur sofortigen Abrufung des augenblicklichen Standortes in einem vorgegebenen Koordinatensystem oder auf einer verfügbaren Landkarte (41) im 2D- oder im 3D-Format.

13. **Mobilteil** nach einem der Ansprüche 2 bis 12, **dadurch gekennzeichnet,**
**dass** es Mittel aufweist, mit deren Hilfe Navigationsstandards wie "GPS", "DGPS", "GSM", "GSM", "GNSS", "EGNOS®", "Galileo®", DGPS-Signale, herkömmliche digitale oder analoge Telefonsignale oder Übertragungssysteme wie: "Bluetooth®", / W@P-Standards, PDA-Multimedia-Card-Standards oder andere Standards oder Anwendungen wie: SMS, Multimedia, "Voice", WAP-Protocol, PDA, WLAN, EWAN, RIMS, PBCC, OFDM, WiFi, DGPS-Signale, Infrarot-Signale, UMTS-Signale, Kurz-, Ultrakurz- Mittel- oder Langwellen- bzw. Amateur-, Minifunk- oder sonstige Rundfunksignale oder Funksignale spezieller oder verschiedener Frequenzen empfangen, verarbeiten, wiedergeben und gesendet werden können und/oder Internet- oder Intranet-Kommunikation ermöglicht wird, beziehungsweise erfolgen kann.

14. **Mobilteil** nach einem der Ansprüche 2 bis 13, **dadurch gekennzeichnet,**
**dass** es Mittel, Elemente, Anschlüsse und sonstige Teile aufweist, mit deren Hilfe weitere Hilfsmittel wie externe Tastaturen, Bildschirme, Drucker und/oder sonstige Peripheriegeräte angeschlossen und betrieben werden können.

15. **Mobilteil** nach einem der Ansprüche 2 bis 14, **dadurch gekennzeichnet,**
**dass** es ein Kommunikations-, Übertragungs-, Orientierungs-, Sicherheits- und Notrufgerät für Wanderer, Spaziergänger, Jogger, Kinder, ältere Menschen, Kranke, Behinderte, Bedrohte jeglicher Art, Skiwanderer, Skifahrer, Snowboarder, Tourengänger, Kletterer, Bergwanderer, Autofahrer, Radfahrer, Bootsfahrer, Ballonfahrer oder für Flieger aller Art ist.

16. **Mobilteil** nach einem der Ansprüche 2 bis 15, **dadurch gekennzeichnet, dass** es ein Kommunikations-, Notruf-, Übertragungs-, Ortungs-, Orientierungs-, Sicherheits- und Alarmgerät für die Objektsicherung, ein Diebstahlschutz für Fahrzeuge und Boote aller Art und/oder ein Personenschutz-Hilfsmittel zur Wiederauffindung Entführter oder Verlaufener ist.

17. **Mobilteil** nach einem der Ansprüche 2 bis 16, **dadurch gekennzeichnet, dass** es eine Vorrichtung ist, zum Aufnehmen und zum Speichern von insbesondere per Funk wiedergegebener oder erhaltener aktueller, regionaler Daten, zu deren Aufnahme, Speicherung und manuellen oder automatischen, gegebenenfalls zeitlich und örtlich versetzten, Wiedergabe, zum Beispiel an ortsversetzte Fremdgeräate, gegebenenfalls auch im Rahmen regionaler funkgestützter drahtloser Netzwerke mittels eines oder mehrerer Mobilteile (1, 1', 1"), zur Bildung interaktiver, beziehungsweise bi-direktionaler Informationstransfer-Systeme.

18. **Mobilteil** nach einem der Ansprüche 2 bis 17, **dadurch gekennzeichnet, dass** es eine Vorrichtung zum Aufnehmen und zum Speichern von insbesondere per Funk wiedergegebener oder erhaltener aktueller, regionaler Daten, zu deren Aufnahme, Speicherung und Wiedergabe ist, wobei ein oder mehrere Mobilteil(e) (1, 1', 1", 1"', 1""), aktuelle Daten eines Senders mit zum Beispiel geringer Reichweite in deren Nähe übernehmen und an einen externen Empfänger in dessen Nähe wieder abgeben, im Rahmen eines interaktiven beziehungsweise bi-direktionalen Informationstransfer-Systems.

19. **Mobilteil** nach einem der Ansprüche 2 bis 18, **dadurch gekennzeichnet, dass** es eine Vorrichtung zum Aufnehmen und zum Speichern von insbesondere per Funk wiedergegebener oder erhaltener aktueller, regionaler Daten ist, zu deren Aufnahme, Speicherung und Wiedergabe, wobei die Aufnahme der aktuellen Senderdaten durch das oder die Mobilteil(e) (1, 1', 1", 1"', 1"") und/oder die Weitergabe an einen oder mehrere exteme(n) Empfänger (41, 41', 41"; 42, 42', 42")mit Mitteln im Mobilteil (1, 1', 1", 1"', 1"") vollautomatisch erfolgt.

20. **Mobilteil** nach einem der Ansprüche 2 bis 19, **dadurch gekennzeichnet, dass** es eine Vorrichtung ist, zur automatischen Aufzeichnung von Daten, Wegstrecken, Höhen, Geschwindigkeiten, Gefälle, Routen und Pisten sowie zur Auswertung dieser Daten zur Leistungsermittlung, für Wettbewerbe und/oder für Vergleiche mit gleichartigen Werten Dritter oder zur Rückverfolgbarkeit zurückgelegter Strecken oder Routen des Benützers.

## Claims

1. A universal **communication system** as a communication, information and navigation system with at least one transportable mobile terminal.
**wherein** the system works with navigation and transmission standards, and/or with other available communication and transmission devices or systems and is comprised mainly of a navigation system, a direction finding system, an information system and at least one mobile terminal and, if necessary, other components and the corresponding software.
**wherein** the mobile terminal is a portable and interactive communication device for a two-way signal and data exchange, designed and usable as a location, emergency and safety unit, in particular as a hand-held or as another easily transportable transmitting and receiving device so that it can also work as an emergency system and/or as a safety system and the mobile terminal has a computer (101), a control system and at least one input unit (15) and input device for individual programming, for completion or for changing already entered route plans (41) or predefined profiles or other commands and data, by a manual entry of data or through an automatic recording,
**wherein** global or regional transmitting and receiving systems (4) are available and usable for broadcasting and receiving avalanche warnings or the latest weather warnings (61)..
**wherein** the mobile terminal has devices with which avalanche warnings or the latest weather warnings (61) from broadcasting or receiving units can be (4, 4', 4", 4'", 42, 42', 42", 42'") automatically received or passed on to this, and also stored, processed and/or evaluated..
**wherein,** the mobile terminal has devices for location through global or regional broadcasting or receiving units (4)..
**and wherein** the mobile terminal has devices for automatic location determination and thus find out whether the mobile terminal is in a region exposed to avalanche or weather warnings and which sets off an acoustic and optical signal.

2. **Mobile terminal** for universal communication according to Claim 1.
**wherein** the mobile terminal has a device for mutual data exchange, for communication and for positioning by and from global or regional broadcasting and receiving units (4), from and with similar "Partner Mobile terminals", that is to say, additional mobile terminals (1, 1', 1", 1"', 1"") among themselves, from or with emergency call stations, radio stations or from other transmitters or receivers.
**wherein** the mobile terminal is a portable and interactive communication device for a two-way signal and data exchange, is designed and usable as a location, emergency and safety unit, in particular as a hand-held or as another easily transportable transmitting and receiving device so that it can also work as an emergency system and/or as a safety system and the mobile terminal has a computer (101), a control system and at least one input unit (15) and input device for individual programming, for completion or changing entered route plans (41) or predefined profiles or other commands and data, by manual entry of data or through automatic recording,
**wherein** the mobile terminal has devices with which avalanche warnings or the latest weather warnings (61) from the broadcasting or receiving unit (4, 41, 41', 41 ", 42, 42', 42", 42'") can be automatically received and or passed on to this, and also stored, processed and/or evaluated.
**wherein,** the mobile terminal has devices for location through global or regional transmitting or receiving units (4)
**and wherein** the mobile terminal has devices for automatic location determination and can thus find out whether the mobile terminal is in a region exposed to avalanche or weather warnings and which set off an acoustic and optical signal in the mobile terminal.

3. **Mobile terminal** according to Claim 2 **characterized in**
**that** it has a device for manual or automatic reception, loading , processing and reproduction of up-to-date regional information, plans and data (6), such as route plans, data regarding the geographical nature of the current area, storm or avalanche warnings, accident reports, route recommendations , weather and missing person announcements or other relevant situation presentations.

4. **Mobile terminal** according to one of the Claims 2. or 3 **characterized in**
**that** it has devices for manually or automatically alerting an emergency call station and/or a distant "partner-mobile terminals" for an acute emergency situation of the mobile terminal user.

5. **Mobile terminal** according to one of the Claims 2 to 4, **characterized in**
**that** it has devices for processing incoming information and warnings and for preparing and displaying or issuing up-to-date recommendation of routes in 2D or 3D format.

6. **Mobile terminal** according to one of the Claims 2. or 5 **characterized in**
**that** it has devices for receiving and storing of up-to-date regional data , in particular, data received from radio, ultrasound or infrared transmission , their recording, storage and for their manual or automatic , if necessary, time and/or location displaced forwarding to , for example, location - displaced alien machines, in particular to global or regional broadcasting and receiving units (4, 41,41'. 41", 42, 42', 42", 42"').

7. **Mobile terminal** according to one of the Claims 2.to 8 **characterized in**
**that** it has at least one transmitter (11), one receiver (12), a directional component (13), one mobile terminal -computer (101), one storage device (102) and devices (14 to 19) with the help of which it can directly communicate with a control station (2) or with a base station (21), with a direction finding system (3), and when necessary, also with regional emergency rescue systems
**and that** it can be targeted and located by these systems, by other units or by "partner devices" either directly or indirectly.

8. **Mobile terminal** according to one of the Claims 2. to 7 **characterized in**
**that** it has an input unit (15), a receiving and recording unit, an internal or external keyboard and/or a voice module with microphone (152) and with loudspeaker (153) for an acoustic system control and a manual or automatic data input and output.

9. **Mobile terminal** according to one of the Claims 2.to 8 **characterized in**
**that** it has an emergency call key (14) or another mechanical, manual, optical or acoustic triggering device for sending and forwarding an emergency call signal along with the details of the actual location together or immediately one after the other.

10. **Mobile terminal** according to one of the Claims 2.to 8 **characterized in**
**that** it has an internal mobile terminal-computer and other means and devices with whose help the position details of the actual location are automatically detected when the loud emergency signal is triggered, and then transmitted and forwarded with the emergency call signal.

11. **Mobile terminal** according to one of the Claims 2. to 10 **characterized in**
**that** it has means and devices with the help of which many, in particular, compatible "partner mobile terminals" (1, 1', 1', 1"', 1") communicate with one another and locate each other mutually.

12. **Mobile terminal** according to one of the Claims 2.to 11 **characterized in**
**that** at least one position key is assigned to a direction finding component (13) of the mobile terminal (1, 1', 1", 1"', 1"") for an immediate calling of the present location into a predefined coordinate system or on an existing map (41) in 2D or 3D format.

13. **Mobile terminal** according to one of the Claims 2.to 12 **characterized in**
**that** it has devices with the help of which navigation standards such as "GPS", DGPS", GNSS", EGNOS®, Galileo ®, DGPS-signals, conventional digital or analog telephone signals or transmission systems such as "Bluetooth®", / W@P-standards, PDA-multimedia-card-standard or other standards or applications such as SMS, multimedia, "voice", WAP-protocol, PDA, WLAN, EWAN, RMS, OFDM, WiFi, DGPS-signals, UMTS-signals, short-wave, ultrashort-wave, medium wave or long wave etc. Amateur signals, Minifunk signals, or other broadcasting signals or radio signals of a special or different frequencies can be received, processed, forwarded and transmitted and/or internet or intranet communication can be facilitated or take place.

14. **Mobile terminal** according to one of the Claims 2.to 13 **characterized in**
**that** it has devices, connectors and other parts with the help of which additional aids such as keyboards, display screens, printers and/or other peripherals can be connected and operated.

15. **Mobile terminal** according to one of the Claims 2 to 14 **characterized in**
**that** it is a communication, transmission, orientation, safety and emergency call device for hikers, walkers, joggers, children, the elderly, the sick, the physically challenged, all types of threatened, ski-trekkers, skiers, snow-loaders, tour-goers, climbers, mountain-hikers, drivers, cyclists, boaters, balloonists or for fliers of all sorts.

16. **Mobile terminal** according to one of the claims 2 to 15, **characterized in**
**that** it is a communication system, emergency call device, transmission device, location, orientation, safety and alarm device for object security, a theft protection system for vehicles and boats of all types and/or a aid for close-quarter protection for finding kidnapped or lost people..

17. **Mobile terminal** according to one of the Claim 2 to 16, **characterized in**
**that,** it is a device for receiving and storing regional data forwarded or received, in particular, through radio, for their recording, storage and manual or automatic forwarding, if necessary, time and position displaced, for example to position displaced alien machines, when necessary, to also within the framework of regional radio-supported wireless network by means of one or more mobile terminals (1, 1', 1") for forming an interactive or bi-directional information transfer system.

18. **Mobile terminal** according to one of the claims 2-17, **characterized in**
**that** it is a device for receiving and storing of up-to-date and regional data, in particular reproduced or received by radio, their recording, storage and reproduction, in which one or more mobile terminals (1, 1', 1", 1"', 1"") take in the current data of a transmitter in its vicinity, for example, with a small reach and pass it on to an external receiver in its vicinity within the framework of an interactive or bi-directional information transfer system.

19. **Mobile terminal** according to one of the claims 2 to 18, **characterized in**
**that** it is a device for receiving and storing of up-to-date regional information reproduced or received, in particular by radio, their recording, storage and reproduction, in which the recording of the current transmitter data by the mobile terminal(s) (1, 1', 11 ", 1'". 1"") and/or the forwarding to one or more external receiver(s) (41, 41', 41", 42, 42', 42") with devices in the mobile part takes place fully automatically.

20. **Mobile terminal** according to one of the Claims 2 to 19 **characterized in**
**that** it is a device for automatic recording of data, roads, altitudes, speeds, gradients, routes and ski slopes and for assessment of this data for performance, for competitions and/or for comparison with similar values of a third party or for traceability of roads or roads covered by the user.

## Revendications

1. Un **système de communication** universel, intégrant au minimum un terminal (combiné) mobile portable, en tant que système de navigation, d'information et de communication.
**Auquel cas,** le système intègre des normes de transmission et navigation et/ou autres dispositifs de transmission, et fonctionne éventuellement avec un système de navigation, de visée et d'information. II intègre au minimum un élément mobile (combiné) ainsi que d'autres composants et le (ou les) logiciel(s) correspondant(s).
**Auquel cas,** l'élément mobile se trouve être un dispositif ou appareil de communication interactif portable, visant à l'échange de données et de signaux. II fonctionne similairement à un appareil ou dispositif de sécurité, d'urgence et de localisation et peut également être utilisé en tant que téléphone mobile, dispositifs de localisation et de navigation, voire comme un média « handheld » (appareil mobile), ou tout autre dispositif d'envoi et de réception aisément transportable. Ainsi, il pourra être utilisé comme système d'urgence et/ou de sécurité et la partie mobile de l'ordinateur (101), tout comme le système de contrôle et une unité d'entrée de données minimum (15) + un moyen d'entrée se trouveront sous contrôle. Le but étant de réinitialiser ou de reprogrammer individuellement, compléter, voire modifier les plans d'itinéraires (41) proposés ou éventuellement les normes de profil ou tout autre donnée, via une entrée manuelle ou automatique des informations. **Auquel cas,** les équipements régionaux et globaux, destinés à la réception et à l'envoi de signaux (4), sont présents et seront utilisés pour la diffusion et la réception de messages d'alertes concernant les avalanches et les problèmes météorologiques.
**Auquel cas,** la partie mobile montre comment les messages d'alertes avalanches ou de problèmes météorologiques immédiats (61), issus des installations ou équipements de réception ou d'envoi (4, 41, 41', 41", 42, 42', 42", 42"'), peuvent être automatiquement reçus, voire transmis ou reproduits, mais également stockés, traités et évalués.
**Auquel cas,** l'élément mobile montre les moyens mis en oeuvre visant à la localisation du problème et ce, via les équipements régionaux et globaux de réception (4) et d'envoi de signaux d'avertissement.
**Et auquel cas,** l'élément mobile montre les moyens mis en oeuvre pour déterminer automatiquement la position du problème. II est ainsi plus facile de constater si l'élément mobile (combiné) se trouve de lui-même au sein d'une zone dangereuse, propice à l'apparition d'événements de type avalanches ou climatiques. Immédiatement, la partie mobile déclenche une alarme acoustique et optique.

2. **Élément mobile** pour un système de communication universel, conformément à l'exigence 1, **Auquel cas,** la partie mobile montre les moyens mis en oeuvre pour s'échanger mutuellement des données et tenter de communiquer, voire localiser le problème *au travers et à partir* des informations fournies par les équipements de réception locaux/globaux de distribution ou d'émission de signaux de danger (4). Ceci est également possible, à *partir de et avec* les «éléments mobiles des partenaires » homogènes, à savoir les éléments mobiles autres (1, 1', 1 ", 1 "', 1 "") et enfin, éventuellement à partir des messages de détresse émis par des stations régionales, des stations de radio et tout autre émetteur ou récepteur.
**Auquel cas,** la partie mobile se trouve être un dispositif ou équipement de communication interactif portable visant à l'échange mutuel de données et de signaux. Cette partie mobile fonctionne comme un appareil ou dispositif de sécurité, d'urgence et de localisation et peut également être utilisée en tant que téléphone mobile (combiné), dispositifs de localisation et de navigation, mais également comme média « handeld » (appareil mobile) ou tout autre dispositif d'envoi et de réception facilement transportable. Ainsi, ce dispositif peut être utilisé en tant que système d'urgence et/ou de sécurité et la partie mobile de l'ordinateur (101), tout comme le système de contrôle et une unité d'entrée de données minimum (15) + un moyen d'entrée se trouvent contrôlés. Le but étant de réinitialiser ou de reprogrammer individuellement, compléter, voire modifier les plans d'itinéraires (41) proposés ou éventuellement les normes de profil ou tout autre ordre ou donnée ce, via une entrée ou un apport manuelle ou automatique des données.
**Auquel cas,** la partie mobile montre comment les messages d'alerte avalanches ou de problèmes météorologiques immédiats (61), issus des installations ou équipements de réception ou d'envoi (4, 41, 41', 41", 42, 42', 42", 42"'), peuvent être automatiquement reçus, voire transmis ou reproduits, mais également stockés, traités et évalués.
**Auquel cas,** l'élément mobile montre les moyens mis en oeuvre visant à la localisation du problème et ce via les équipements régionaux/globaux de réception (4) et d'envoi des signaux d'avertissement. **Et auquel cas,** l'élément mobile montre les moyens mis en oeuvre pour déterminer automatiquement la position du problème. II est ainsi plus facile de constater si l'élément mobile trouve lui-même au sein d'une zone dangereuse, propice à l'apparition d'événements de type avalanches ou climatiques. Immédiatement, la partie mobile déclenche une alarme acoustique et optique.

3. **Élément mobile** selon l'exigence 2, **et identifié comme tel par,**
**Le fait que** c'est un moyen de réceptionner, transporter, traiter et reproduire automatiquement ou manuellement les informations actuelles et régionales, les plans et données (6), ainsi que les itinéraires routiers d'accès et informations visant la configuration géographique actuelle de la zone à risque. Pour information, les risques sont liés à la présence d'orages ou à des déclenchements d'avalanches. Les informations traitées visent à communiquer, émettre des recommandations, mettre en situation et représenter, voire concrétiser ces phénomènes à venir ou survenus, relatifs à des phénomènes climatiques.

4. **Élément mobile** selon les exigences 2 ou 3, **et identifié comme tel par,**
Le fait que c'est un moyen d'alerter automatiquement ou manuellement une station de secours et/ou tout autre « élément mobile partenaire », suite au déclenchement d'une situation d'urgence extrême par l'utilisateur de l'élément mobile.

5. **Élément mobile** selon les exigences ou recommandations 2 à 4, et identifié en tant que tel par le fait que c'est non seulement un moyen de traiter des informations et avertissements détaillés, mais également un outil pour créer, indiquer ou éditer des propositions d'itinéraires actuels au format 2D ou 3D.

6. **Élément mobile** selon l'une des exigences 2 à 5, **et identifié comme tel par,**
**Le fait que** c'est un moyen d'enregistrer et de mémoriser, notamment à partir d'un transfert radio, par ultrasons ou émission infrarouge, les informations actuelles et régionales reçues et de les saisir, les appréhender, les stocker à plus ou moins long terme sur un mode automatique ou manuel. On peut éventuellement déplacer la communication au niveau local ou par exemple la transférer sur un autre lieu, à destination de dispositifs étrangers, en particulier vers des appareils ou équipements régionaux ou globaux d'émission ou de réception (4; 41, 41', 41"; 42, 42', 42", 42'").

7. **Élément mobile** selon l'une des exigences 2 à 6, **et identifié comme tel par,**
**Le fait qu**'il intègre au minimum un émetteur (11), un récepteur (12), un composant de visée (13), un calculateur ou ordinateur mobile (101), une mémoire (102) et un moyen (14 à 19), avec l'aide duquel il est également possible de communiquer directement avec un poste ou une station de contrôle (2) ou plutôt une station de base correspondante (21) avec système de visée (3). Le cas échéant, on peut également avoir recours à des systèmes de secours d'urgence régionaux avec lesquels il est possible de communiquer directement. **Par le fait** également, qu'à partir de ces systèmes, voire équipements ou installations autres, mais également depuis des « installations artenaires », il soit possible de tomber dessus et localiser directement ou indirectement le problème.

8. **Élément mobile** selon l'une des exigences 2 à 7, **et identifié comme tel par,**
**Le fait** qu'il intègre une unité d'entrée (15), un élément de réception et de saisie ou compréhension, un clavier interne ou externe et/ou module de langue avec microphone (152) et haut-parleur (153) en vue d'une prise de commande acoustique du système et pour sortir ou entrer automatiquement, voire manuellement des données.

9. **Élément mobile** selon l'une des exigences 2 à 8, **et identifié en tant que tel par,**
**Par le fait qu**'il intègre au minimum, une touche d'appel de secours (14) ou tout autre moyen similaire, qu'il soit mécanique, manuel, optique ou acoustique. Le but étant de pouvoir émettre immédiatement et de manière ciblée une information, si minime qu'elle soit, et plus particulièrement un signal d'appel de détresse, ainsi que la localisation de la position de l'accident ou de l'évènement

10. **Élément mobile** selon l'une des exigences 2 à 9, et identifié comme tel par,
**Par le fait qu**'il intègre un calculateur ou ordinateur mobile (101) interne et tout autre moyen ou tous dispositifs grâce auxquels, par le biais du déclenchement et de l'envoi du signal d'appel de détresse extrême et l'indication de la position du lieu de l'évènement, il est possible de visualiser et déterminer automatiquement, même à une très grande distance, le lieu du sinistre.

11. **Élément mobile** selon l'une des exigences 2 à 10, **et identifié comme tel par,**
**Par le fait qu**'il montre et intègre des moyens ou dispositifs parfois identiques (de type « éléments mobiles partenaires » (1, 1', 1", 1"', 1 "")), grâce auxquels il est possible de communiquer mutuellement et de se positionner.

12. **Élément mobile** selon l'une des exigences 2 à 11, **et identifié comme tel par,**
**Le fait qu'**il intègre des composants de visée (13), des parties mobiles (1, 1', 1", 1"', 1"") avec au minimum une touche de position (131), permettant de déclencher un appel immédiat en cas de problème et de déterminer clairement la localisation, via un système coordonné donné ou par le biais d'une carte terrestre (41) disponible au format 3D.

13. **Élément mobile** selon l'une des exigences 2 à 12, **et identifié comme tel par,**
**Par le fait qu**'il intègre des moyens, permettant l'emploi de standards de navigation tels que « GPS », « GNSS », « EGNOS® », « Galileo® », les signaux DGPS, les signaux téléphoniques traditionnels analogiques ou numériques ou encore, des systèmes de transmission du type : « Bluetooth® », / Normes W@P, les « PDA-Multimedia-Card-Standards » ou toutes autres normes ou applications de type : SMS, Multimédia, « Voice », WAP-Protocol, PDA, WLAN, EWAN, RIMS, PBCC, OFDM, WiFi, Signaux DGPS, Signaux Infrarouges. On peut également utiliser des signaux UMTS, avec ondes courtes, ultracourtes, moyennes ou longues - et/ou signaux de radiodiffusion autres (amateurs ou mini-radio) ou encore des signaux de radio spécifiques, voire des fréquences diverses permettant de réceptionner, traiter, reproduire et envoyer des signaux et messages. Il est également possible d'utiliser la communication intranet ou internet.

14. **Élément mobile** selon l'une des exigences 2 à 13, **et identifié en tant que tel par,**
Par le fait qu'il met en évidence les moyens, éléments, raccords et autres associations permettant d'améliorer la coordination de l'aide. On peut citer, entre autres, les claviers, écrans, typographes et/ou autres installations périphériques pouvant être raccordées et mises en route.

15. **Élément mobile** selon l'une des exigences 2 à 14, **et identifié en tant que tel par,**
**Le fait qu**'il est un appareil de communication, de transmission, d'orientation, de protection ou sécurité et de signal de détresse, destiné au randonneurs, promeneurs, joggeurs, enfants, seniors, malades, handicapés, personnes dépendantes de tout style, mais également aux professionnels ou novices du ski, snowboarders, aux groupes d'excursion, grimpeurs, randonneurs de montagne, conducteurs, cyclistes, propriétaires de bateaux et avions ou encore aéronautes de tout type.

16. **Élément mobile** selon l'une des exigences 2 à 15, et **identifié comme tel par le fait de la présence** de systèmes d'alarme, de sécurité, d'orientation, de transmission, d'appel d'urgence et de communication, visant à garantir une protection antivol des véhicules et bateaux de tout type et à assurer un moyen de protection complémentaire des personnes, notamment en cas de disparition.

17. **Élément mobile** selon l'une des exigences 2 à 16 et **identifié comme tel par le fait qu**'il s'agit d'un dispositif visant à recueillir et stocker (notamment par radio) des informations actuelles, régionales reçues ou reproduites, pour ensuite mieux les saisir et les mémoriser sur un mode automatique ou manuel, éventuellement à long terme et/ou déplacer la communication au niveau local, voire la transférer sur un autre lieu. Il est par exemple possible d'effectuer une reproduction des signaux à destination des appareil étrangers, ou éventuellement, dans le cadre de dispositifs régionaux de transmissions de radiocommunication sans fil, au moyen d'un ou plusieurs éléments mobiles (1, 1', 1") ou encore sur la formation de systèmes de transferts d'informations bi-directionnels et/ou interactifs.

18. **Élément mobile** selon l'une des exigences 2 à 17 **et identifié comme tel par le fait qu**'il s'agit d'un dispositif visant à recueillir et stocker (notamment par radio) des informations actuelles, régionales reçues ou reproduites. Les informations sont ensuite saisies et reproduites moyennant l'utilisation d'un ou plusieurs éléments mobile(s) (1,1',1",1"',1""), de données actuelles fournies par l'émetteur, lequel même en cas de faible portée, verra son information relayée et reproduite, tout comme le récepteur par ailleurs. Tout ceci dans le cadre de systèmes de transferts d'informations bi-directionnels, ou plutôt interactifs.

19. **Élément mobile** selon l'une des exigences 2 à 18 et **identifié comme tel par le fait qu**'il s'agit d'un dispositif visant à recueillir et stocker (notamment par radio) des informations actuelles, régionales reçues ou reproduites. Ces informations sont ensuite saisies, stockées et reproduites, moyennant l'utilisation des données actuelles de l'émetteur ou expéditeur via un ou plusieurs éléments mobile(s) (1,1',1",1"',1"") et/ou la reproduction ou cession des données via un ou plusieurs récepteur(s) externe(s) (41, 41', 41"; 42, 42', 42") incluant la mise en place de moyens automatiques en élément mobile (1, 1', 1 ", 1 "', 1 "").

20. **Élément mobile** selon l'une des exigences 2 à 19 **et identifié comme tel par le fait qu**'il s'agit d'un dispositif visant à enregistrer et reproduire automatiquement les données, distances, hauteurs, vitesses, inclinaisons ou pentes, voire les itinéraires et pistes. Il sert également à analyser ces différentes données et à les confronter, puis à déterminer les performances. Il procèdera également à des comparaisons avec des valeurs similaires tierces ou encore vérifiera la traçabilité du trajet, de la distance ou de l'itinéraire parcouru par l'utilisateur.
